(19) Europäisches Patentamt
European Patent Office
Office européen des brevets

(11) **EP 4 236 094 A1**

(12) **EUROPEAN PATENT APPLICATION**
published in accordance with Art. 153(4) EPC

(43) Date of publication:
**30.08.2023 Bulletin 2023/35**

(21) Application number: **21899951.4**

(22) Date of filing: **26.11.2021**

(51) International Patent Classification (IPC):
**H04B 7/0413** (2017.01)

(52) Cooperative Patent Classification (CPC):
**H04B 7/0413; H04B 7/08; H04W 72/04**

(86) International application number:
**PCT/CN2021/133697**

(87) International publication number:
**WO 2022/116919 (09.06.2022 Gazette 2022/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.12.2020 CN 202011388483**

(71) Applicant: **Huawei Technologies Co., Ltd.**
**Shenzhen, Guangdong 518129 (CN)**

(72) Inventors:
• **WANG, Ting**
**Shenzhen, Guangdong 518129 (CN)**
• **SUN, Huan**
**Shenzhen, Guangdong 518129 (CN)**
• **LIU, Yong**
**Shenzhen, Guangdong 518129 (CN)**
• **BI, Xiaoyan**
**Shenzhen, Guangdong 518129 (CN)**
• **HE, Gaoning**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **COMMUNICATION METHOD, DEVICE AND SYSTEM**

(57)     A communication method, device, and system belong to the field of communication technologies. In a solution provided in this application, a first device may determine a frame structure and perform communication based on the frame structure, so that the first device may receive, in a receiving time unit, a setting instruction indicating a first state, and reflect a signal based on the first state in a reflection time unit. It may be learned that in the solution of this application, the first device may perform communication based on the determined frame structure, so that the first device may receive a setting instruction sent by a second device, and reflect the signal based on the first state indicated by the setting instruction. Therefore, flexibility of the first device is high, and the first device may be applied to a plurality of scenarios. This improves communication performance. When the first device is an IRS, flexibility of the IRS is high. This application is used for communication between devices.

EP 4 236 094 A1

FIG. 3

**Description**

This application claims priority to Chinese Patent Application No. 202011388483.9, filed on December 1, 2020 and entitled "COMMUNICATION METHOD, DEVICE, AND SYSTEM", which is incorporated herein by reference in its entirety.

**TECHNICAL FIELD**

This application relates to the field of communication technologies, and in particular, to a communication method, device, and system.

**BACKGROUND**

In order to alleviate problems of a high cost and high power consumption caused by large-scale multiple-input multiple-output (multiple-input multiple-output, MIMO), and to change channel conditions of a base station and a terminal, an intelligent reflecting surface (intelligent reflecting surface, IRS) is introduced in a communication system. The IRS may be a device that includes a large quantity of reflection units, and the reflection units include a passive device and/or an active device that have features of a low cost and low power consumption. The IRS may adjust a phase of an incident signal by using the reflection unit on the IRS and reflect the signal.

In a conventional technology, the IRS is applied between devices that need to perform communication, and is configured to reflect a communication signal. The IRS may generally be mounted at a fixed location, and the IRS may reflect the signal based on a preconfigured operating state.

In the conventional technology, the IRS may reflect the signal only based on the preconfigured operating state. Therefore, flexibility of the IRS is poor, an applicable communication scenario is limited, and communication performance is poor.

**SUMMARY**

This application provides a communication method, device, and system, to resolve a problem that flexibility of an IRS is poor in the conventional technology.

According to a first aspect, a communication method is provided, applied to a first device. The method includes: The first device first determines a frame structure, and then performs communication based on the determined frame structure. The frame structure includes a receiving time unit and a reflection time unit. The receiving time unit is a time unit in which the first device receives a setting instruction, and the setting instruction indicates a first state. The reflection time unit is a time unit in which the first device reflects a signal based on the first state.

The first device may determine the frame structure and perform communication based on the frame structure, so that the first device may receive, in the receiving time unit, the setting instruction indicating the first state, and reflect the signal based on the first state in the reflection time unit. It may be learned that in the solution of this application, the first device may perform communication based on the determined frame structure, so that the first device may receive a setting instruction sent by a second device, and reflect the signal based on the first state indicated by the setting instruction. Therefore, flexibility of the first device is high, and the first device may be applied to a plurality of scenarios. This improves communication performance. When the first device is an IRS, flexibility of the IRS is high.

Optionally, the first device includes a plurality of reflection units, and the reflection units may adjust a parameter of the signal. The setting instruction includes: adjustment information for the parameter of the signal of at least some reflection units in the plurality of reflection units.

The reflection units in the first device may adjust the parameter of the signal, so that the first device reflects the signal in different cases. In addition, the reflection units may adjust the parameter of the signal under an indication of an instruction field, so that application flexibility of the first device is high, and the first device may be applied to a plurality of scenarios. This improves the communication performance.

Optionally, the parameter of the signal includes: at least one of a phase, an amplitude, an angle of reflection, an angle of arrival, an angle of offset, a quantity of beams, and a beam angle.

The reflection units in the first device may adjust a plurality of parameters of the signal, so that flexibility of reflecting the signal by the first device is high, and the reflection units in the first device may be applied to a plurality of scenarios. This improves improving the communication performance.

Optionally, the plurality of reflection units include: at least one active unit and at least one non-active unit. The active unit may receive the signal, and the non-active unit may reflect the signal. That the first device performs communication based on the frame structure includes: The first device receives the setting instruction through at least some active units in the receiving time unit; and the first device reflects the signal through the at least some non-active units in the reflection time unit. Certainly, the first device may also reflect the signal through all active units and all non-active units in the reflection time unit, or the first device may also reflect the signal through all active units and some non-active units in the reflection time unit, or the first device may also reflect the signal through some active units and some non-active units in the reflection time unit. This is not limited in this application.

Optionally, that the first device performs communication based on the frame structure includes: The first device receives the setting instruction through a physical downlink control channel (physical downlink control channel, PDCCH) in the receiving time unit.

The second device may send downlink control information through the physical downlink control channel, and include the setting instruction in the downlink control information.

In the manner, the setting instruction is carried in the PDCCH, so that a dynamic indication and a flexible indication of the setting instruction may be implemented, and flexibility of reflecting the signal by the first device is improved. The manner may be applied to a plurality of scenarios. This improves the communication performance.

Optionally, the method may include: The first device receives information about at least one time unit in the frame structure. That the first device determines the frame structure includes: The first device determines the frame structure based on the information about the at least one time unit.

The first device may receive the information about the at least one time unit in the frame structure and that is sent by the second device, and determine the frame structure based on this, so that the first device has high flexibility in determining the frame structure, and may be applied to a plurality of scenarios. This improves the communication performance. Optionally, the information about the at least one time unit may also not be sent by the second device to the first device, but may be preconfigured on the first device, or predefined in a protocol. This is not limited in this application.

Optionally, the information about the at least one time unit indicates a location of each of the at least one time unit in a target time period in which the time unit is located. That the first device determines the frame structure based on the information about the at least one time unit includes: The first device determines the location of each of the at least one time unit in the target time period; and the first device determines the frame structure based on the location of each of the at least one time unit in the target time period.

The target time period in which each time unit is located is preset on the first device, and the first device only needs to determine the location of each time unit in the target time period based on an indication of the information. In the manner, overheads of some instructions may be reduced, and it may be ensured that determining of the time unit has flexibility.

Optionally, the at least one time unit includes the reflection time unit, and information about the reflection time unit is carried in the setting instruction.

The information about the reflection time unit is carried in the setting instruction, so that the overheads of the instructions may be reduced.

Optionally, the method further includes: The first device sends capability information indicating a processing capability of the first device.

The first device sends the capability information to the second device, to ensure that the second device knows the processing capability of the first device. In this way, sufficient processing time is reserved in a communication process, to ensure that no error occurs in communication. In addition, the frame structure is determined based on terminal capability information, so that capability situations of different terminals may be better met, communication may be flexibly performed, and communication performance may be improved.

Optionally, the frame structure further includes a processing time unit. The processing time unit is located between the receiving time unit and the reflection time unit, and the processing time unit is a time unit in which the first device switches from a current state to the first state.

The first device may switch a state of the first device from the current state to the first state in the processing time unit, so that the first device may reflect the signal in the first state, and may determine the state based on an indication of the base station. This better adapts to a channel status and improves the communication performance.

Optionally, the method further includes: The first device receives a time domain synchronization instruction. The first device performs time domain synchronization based on the time domain synchronization instruction. The first device sends a time domain synchronization response.

The first device may perform time domain synchronization based on the time domain synchronization instruction, so that subsequent communication between the first device and the second device may be synchronized, namely, time domain synchronization with the second device. This improves the communication performance and ensures communication reliability.

According to a second aspect, another communication method is provided, and is applied to a second device. The method includes: A second device determines a receiving time unit in a frame structure, where the receiving time unit is a time unit in which the second device sends a setting instruction, and the setting instruction indicates a first state. The second device sends the setting instruction based on the determined receiving time unit.

Optionally, that the second device sends the setting instruction based on the receiving time unit includes: The second device sends the setting instruction through a physical downlink control channel PDCCH based on the receiving time unit.

In the manner, the setting instruction is carried in the PDCCH, so that a dynamic indication and a flexible indication of the setting instruction may be implemented, and flexibility of reflecting the signal by the first device is improved. The manner may be applied to a plurality of scenarios. This improves the communication performance.

Optionally, the method may further include: The second device sends information about at least one time unit in the frame structure, where the frame structure includes: the receiving time unit and a reflection time unit.

Optionally, the at least one time unit may include the reflection time unit, and information about the reflection time unit is carried in the setting instruction.

Optionally, the method may further include: The second device receives capability information indicating a processing capability. When the processing capability indicated by the capability information is less than a processing capability threshold, the frame structure includes: the receiving time unit, a processing time unit, and the reflection time unit.

Optionally, before the second device sends the setting instruction to the first device based on the receiving time unit, the method may further include: The second device sends a time domain synchronization instruction to the first device. The second device receives the time domain synchronization response sent by the first device.

The first device may perform time domain synchronization based on the time domain synchronization instruction, so that subsequent communication between the first device and the second device may be synchronized, namely, time domain synchronization with the second device. This improves the communication performance and ensures communication reliability.

According to a third aspect, a communication device is provided. The communication device includes various modules configured to perform the communication method provided in the first aspect.

According to a fourth aspect, a communication device is provided. The communication device includes various modules configured to perform the communication method provided in the second aspect.

According to a fifth aspect, a communication device is provided. The communication device includes: a processor and a memory. The processor is configured to execute a program stored in the memory, to implement the communication method provided in the first aspect.

According to a sixth aspect, a communication device is provided. The communication device includes: a processor and a memory. The processor is configured to execute a program stored in the memory, to implement the communication method provided in the second aspect.

According to a seventh aspect, a communication system is provided. The communication system includes: a first device and a second device, and the first device is the communication device provided in the third aspect or the communication device provided in the fifth aspect. The second device is the communication device provided in the fourth aspect or the communication device provided in the sixth aspect.

According to an eighth aspect, a computer-readable storage medium is provided. The computer-readable storage medium stores instructions, and when the instructions are run on a computer, the computer is enabled to perform the method provided in the first aspect or the method provided in the second aspect.

According to a ninth aspect, a computer program product including instructions is provided. When the computer program product is run on a computer, the computer performs the method according to the first aspect or the second aspect.

In summary, this application provides a communication method, device, and system. In the communication method, the first device may determine the frame structure and perform communication based on the frame structure, so that the first device may receive, in the receiving time unit, the setting instruction indicating the first state, and reflect the signal based on the first state in the reflection time unit. It may be learned that in the solution of this application, the first device may perform communication based on the determined frame structure, so that the first device may receive a setting instruction sent by a second device, and reflect the signal based on the first state indicated by the setting instruction. Therefore, flexibility of the first device is high, and the first device may be applied to a plurality of scenarios. This improves communication performance. When the first device is an IRS, flexibility of the IRS is high.

## BRIEF DESCRIPTION OF DRAWINGS

FIG. 1 is a schematic diagram of a structure of a communication system according to an embodiment of this application;

FIG. 2 is a schematic diagram of a structure of a first device according to an embodiment of this application;

FIG. 3 is a flowchart of a communication method according to an embodiment of this application;

FIG. 4 is a schematic diagram of a frame structure according to an embodiment of this application;

FIG. 5 is a schematic diagram of another frame structure according to an embodiment of this application;

FIG. 6 is a schematic diagram of yet another frame structure according to an embodiment of this application;

FIG. 7 is a schematic diagram of a structure of another communication system according to an embodiment of this application;

FIG. 8 is a schematic diagram of a structure of yet another communication system according to an embodiment of this application;

FIG. 9 is a schematic diagram of inter-device communication according to an embodiment of this application;

FIG. 10 is a schematic diagram of a structure of a setting instruction according to an embodiment of this application;

FIG. 11 is a schematic diagram of a structure of another setting instruction according to an embodiment of this application;

FIG. 12 is a flowchart of another communication method according to an embodiment of this application;

FIG. 13 is a flowchart of yet another communication method according to an embodiment of this application;

FIG. 14 is a flowchart of still another communication method according to an embodiment of this application;

FIG. 15 is a flowchart of still another communication method according to an embodiment of this application;

FIG. 16 is a schematic diagram of a structure of a communication device according to an embodiment of this application;

FIG. 17 is a schematic diagram of a structure of another communication device according to an embodiment of this application;

FIG. 18 is a schematic diagram of a structure of yet another communication device according to an embodiment of this application;

FIG. 19 is a schematic diagram of a structure of still another communication device according to an embodiment of this application;

FIG. 20 is a schematic diagram of a structure of still another communication device according to an embodiment of this application;

FIG. 21 is a schematic diagram of a structure of still another communication device according to an embodiment of this application;

FIG. 22 is a schematic diagram of a structure of still another communication device according to an embodiment of this application;

FIG. 23 is a schematic diagram of a structure of still another communication device according to an embodiment of this application;

FIG. 24 is a schematic diagram of a structure of still another communication device according to an embodiment of this application;

FIG. 25 is a schematic diagram of a structure of still another communication device according to an embodiment of this application; and

FIG. 26 is a schematic diagram of a structure of still another communication device according to an embodiment of this application.

## DESCRIPTION OF EMBODIMENTS

The following describes in detail a communication method, device, and system provided in embodiments of this application with reference to accompanying drawings.

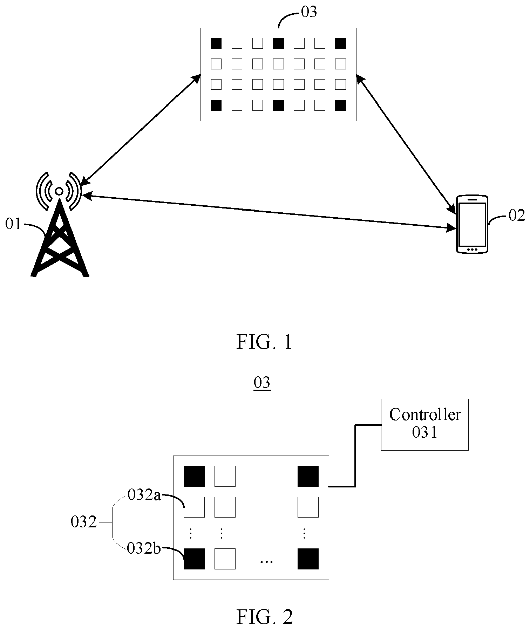

FIG. 1 is a schematic diagram of a structure of a communication system according to an embodiment of this application. The communication system may include a plurality of communication devices, such as a base station (base station, BS) 01 and a user equipment (user equipment, UE) 02 in FIG. 1. It should be noted that the communication system may include at least one communication device, for example, a communication device such as a base station, UE, a router, or a core network (core network, CN) device. In FIG. 1, an example in which a plurality of communication devices in the communication system include the base station and the UE is used.

The base station may also be referred to as a NodeB. The base station in the communication system provided in embodiments of this application may be any base station, for example, a long term evolution (long term evolution, LTE) base station (also referred to as an eNB), a continuously evolved NodeB base station (also referred to as a gNB) provided in a 5th generation (5th generation, 5G) new radio (new radio, NR) system, a 6th generation (6th generation, 6G) base station, or a base station in a future communication standard. The UE may be any type of UE, for example, an in-vehicle UE, a portable UE, a handheld UE, or an airplane.

For example, the base station may also be referred to as a network device. The network device may be a device supporting wired access, or may be a device supporting wireless access. For example, the network device may be an access network (access network, AN) device/a radio access network (radio access network, RAN) device, and includes a plurality of AN/RAN nodes. The AN/RAN node may be: an access point (access point, AP), a NodeB (NodeB, NB), an enhanced NodeB (enhance NodeB, eNB), a next-generation NodeB (for example, a NodeB in NR: a gNB), a transmission reception point (transmission reception point, TRP), a transmission point (transmission point, TP), or another access node.

Currently, for example, some RAN nodes may be: an evolved NodeB (gNB), an evolved NodeB (evolved NodeB, eNB), a radio network controller (radio network controller, RNC), a home NodeB (for example, a home evolved NodeB or a home NodeB, HNB), wireless fidelity (wireless fidelity, Wi-Fi), an access point (AP), a radio relay node, a radio backhaul node, a transmission point (TP), or a transmission reception point (TRP), or the like, or may be 5G, such as a gNB in an NR system, a transmission point (TRP or TP), one antenna panel or a group of antenna panels of a base station in a 5G system, a mobile station, an unmanned aerial vehicle station, or a satellite station, or may be a network node that forms a gNB or a transmission point, for example, a baseband unit (baseband unit, BBU), a distributed unit (distributed unit, DU), D2D, V2X, or a device that bears a base station function in machine-to-machine (machine, M2M) communication, or a base station in a future communication system.

In some deployments, the gNB may include a central unit (central unit, CU) and a DU, and the gNB may further include an active antenna unit (active antenna unit, AAU). The CU may implement some functions of the gNB, and the DU may implement some functions of the gNB. For example, the CU is responsible for processing a non-real-time protocol and a non-real-time service, to implement functions of radio resource control (radio resource control, RRC) and a packet data convergence protocol (packet data convergence protocol, PDCP) layer. The DU is responsible for processing a physical layer protocol and a real-time service, to implement functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer eventually becomes information at the PHY layer, or is changed from information at the PHY layer. Therefore, in this architecture, higher-layer signaling such as RRC layer signaling may also be considered as being sent by the DU or sent by the DU and the AAU. It may be understood that the network device may be a device including one or more of a CU node, a DU node, and an AAU node. In addition, the CU may be classified as a network device in a RAN, or the CU may be classified as a network device in the core network. This is not limited in this application.

The network device may provide a service for a cell. The terminal device communicates with the cell through a transmission resource (for example, a frequency domain resource or a spectrum resource) allocated by the network device. The cell may belong to a macro eNB (for example, a macro eNB or a macro gNB), or may belong to a base station corresponding to a small cell (small cell). The small cell herein may include: a metro cell (metro cell), a micro cell (micro cell), a pico cell (pico cell), a femto cell (femto cell), and the like. These small cells have characteristics of small coverage and low transmit power, and are used to provide a high-speed data transmission service.

For example, the terminal device may be referred to as a terminal (terminal), a user equipment (user equipment, UE), a mobile station (mobile station, MS), a mobile terminal (mobile terminal, MT), or the like, and may be a device that provides voice and/or data connectivity for a user. For example, the terminal device may be a mobile phone (mobile phone), an unmanned aerial vehicle, a tablet computer, a computer having a wireless transceiver function, a handheld device having a wireless connection function, an in-vehicle device, or the like. The terminal device may alternatively be a palmtop computer, a mobile internet device (mobile internet device, MID), a wearable device, an enhanced mobile broadband (enhanced mobile broadband, eMBB) terminal, an ultra-reliable low-latency communication (ultra-reliable low-latency communication, URLLC) terminal, a machine type communication (machine type communication, MTC) terminal, a narrow band internet of things (narrow band internet of things, NB-IoT) terminal, a customer premise equipment (customer premise equipment, CPE) terminal, a virtual reality (virtual reality, VR) terminal, an augmented reality (augmented reality, AR) terminal, a vehicle to everything (vehicle to everything, V2X) terminal, a wireless terminal in industrial control, a wireless terminal in unmanned driving, a wireless terminal in telemedicine, a wireless terminal in smart grid, a wireless terminal in transportation security, a wireless terminal in smart city (smart city), a wireless terminal in smart home (smart home), a sensor, a cellular phone, a cordless phone, a session initiation protocol (session initiation protocol, SIP) phone, a wireless local loop (wireless local loop, WLL) station, a personal digital assistant (personal digital assistant, PDA), a computing device or another processing device connected to a wireless modem, an in-vehicle terminal, a vehicle with a vehicle to vehicle (vehicle to vehicle, V2V) communication capability, an unmanned aerial vehicle with an unmanned aerial vehicle (unmanned aerial vehicle, UAV) to an unmanned aerial vehicle communication capability, a terminal device in a 5G network, a terminal device in a future evolved public land mobile network (public land mobile network, PLMN), or the like is not limited.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. Generalized wearable intelligent devices include full-featured and large-size devices that can implement complete or partial functions without depending on smartphones, such as smart watches or smart glasses, and devices that focus on only one type of application function and need to work with other devices such as smartphones, such as various smart bands or smart jewelry for monitoring physical signs.

In addition, the terminal device may alternatively be a terminal device in an internet of things (internet of things, IoT) system. An IoT is an important part in future development of information technologies. A main technical feature of the IoT is to connect things to a network by using a communication technology, to implement an intelligent network for human-machine interconnection and thing-thing interconnection. IoT technologies can achieve massive connections, deep coverage, and terminal power saving by using, for example, a narrow band (narrow band, NB) technology.

In addition, the terminal device may further include a sensor such as an intelligent printer, a train detector, or a gas station, and main functions of the terminal device include collecting data, receiving control information and downlink data of the network device, sending an electromagnetic wave, and transmitting uplink data to the network device.

Communication devices in the communication system may transmit a signal to each other. For example, the base station 01 and the UE 02 in FIG. 1 may transmit the signal to each other through an air interface.

For example, the base station in the communication system may communicate with the UE by using a large-scale antenna technology. The large-scale antenna technology, namely, a large-scale MIMO technology, is also referred to as a massive (Chinese: massive) MIMO technology, or may be referred to as a three-dimensional (three-dimensional, 3D) MIMO technology, a full-dimensional MIMO technology, or the like. Compared with a conventional MIMO technology, the large-scale antenna technology may provide more antennas and more data transmission channels. Application of the large-scale antenna technology enables the base station to provide services for more UEs on a limited time-frequency resource, and provides more arrival paths between the base station and the UE. This improves reliability of signal transmission between the base station and the UE. However, there are also problems of a high cost and high power consumption due to wide application of the large-scale antenna technology.

To alleviate the problems of the high cost and high power consumption caused by the large-scale antenna technology, and to change channel conditions of the base station and a terminal, a first device (for example, a first device 03 in FIG. 1) may be introduced in the communication system. The first device is located between at least one group of communication devices. The first device may be a device including a large quantity of passive low-cost devices, and has advantages of a low cost and low power consumption. In addition, the first device may reflect, between the communication devices, a signal transmitted by the communication device, to assist signal transmission between the communication devices. For example, the first device may change a channel between the base station and the UE. This improves reliability of signal transmission between the communication devices.

The first device 03 may be an IRS, a large intelligent surface (large intelligent surface, LIS), a reconfiguration intelligent surface (reconfiguration intelligent surface, RIS), a reconfigurable intelligent surface, a reconfigurable surface, an information metamaterial, a coded metamaterial, or the like. FIG. 2 is a schematic diagram of a structure of a first device according to an embodiment of this application. As shown in FIG. 2, the first device 03 may include a plurality of reflection units 032 and a controller 031. Each reflection unit 032 may independently adjust a parameter of a signal, and the controller 031 is configured to set a state of the reflection unit 032, to achieve an objective of setting a state of the IRS. The reflection unit 032, in different states, adjusts the parameter of the signal in different statuses, and the first device 03, in different states, reflects the signal in different statuses. The reflection unit 032 may be a non-active unit or a passive device, for example, 032b, or may be an active unit or an active device, for example, 032a. This is not limited in this application.

In the conventional technology, the first device in the communication system usually reflects a signal based on a preconfigured operating state, a status of adjusting the signal is fixed, and flexibility is poor. In the communication system provided in embodiments of this application, the first device may adjust the operating state under control of another device, and change a status of adjusting the parameter of the signal by at least some reflection units in the first device, so that application of the first device is more flexible.

The technical solutions provided in embodiments of this application may be applied to various communication systems, such as, an LTE system, a 5G mobile communication system, a 6G mobile communication system, a Wi-Fi system, a short-distance communication system, a satellite communication system, an Internet of Vehicles communication system, a non-land communication system, a future communication system, or a system integrating a plurality of communication systems. This is not limited in embodiments of this application. 5G may also be referred to as NR.

The technical solutions provided in embodiments of this application may be applied to various communication scenarios, for example, may be applied to one or more of the following communication scenarios: eMBB, URLLC, MTC, mMTC, device-to-device (device-to-device, D2D), V2X, V2V, IoT, VR, AR, CPE, and a sensor

Embodiments of this application are applicable to both a homogeneous network scenario and a heterogeneous network scenario, and a transmission point is not limited. The transmission point may be coordinated multipoint transmission between macro base stations, between micro base stations, and between macro base stations and micro base stations. Embodiments of this application are applicable to a frequency division multiplexing system, a time division multiplexing system, a duplex system, an access backhaul system, a relay system, and the like. Embodiments of this application are applicable to a low-frequency scenario (for example, below 6G), a high-frequency scenario (for example, above 6G), a millimeter-wave band, terahertz, optical communication, and the like.

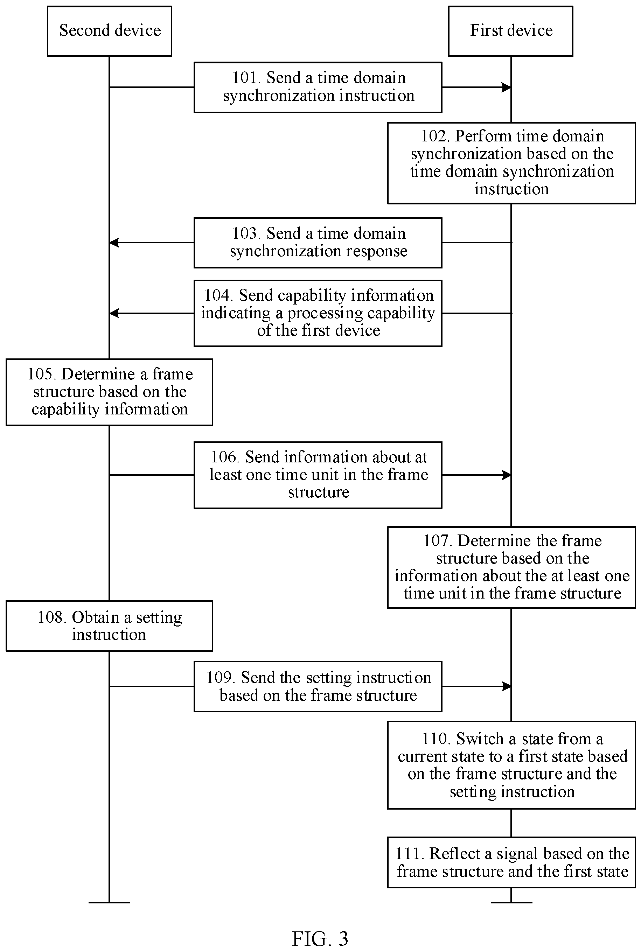

FIG. 3 is a flowchart of a communication method according to an embodiment of this application. The method may be applied to the communication system shown in FIG. 1. The communication system may include: a first device 03 and a second device. Each device in the second device may be any communication device in the communication system, for example, a base station 01, a UE 02, or a core network device. A description is made below by using an example in which the second device is the base station 01.

As shown in FIG. 3, the method may include the following steps.

Step 101. A second device sends a time domain synchronization instruction to a first device. Correspondingly, the first device may receive time domain synchronization signaling.

The time domain synchronization instruction sent by the second device indicates the first device to synchronize time domain of the first device with time domain of the second device. Time domain synchronization may refer to synchronization of a time unit.

For example, the time domain synchronization instruction may indicate a number of the time unit in which a signal of the second device is currently located and a length of each time unit. The time domain synchronization instruction indicates the first device to set a length of the time unit of the first device to the length of the time unit indicated by the time domain synchronization instruction, and set a number of a current time unit of the first device to a number of a current time unit indicated by the time domain synchronization instruction.

For example, it is assumed that the number of the time unit in which the second device is currently located is 10, and the length of the time unit is 1 millisecond (milliseconds, ms), the time domain synchronization instruction may include the number 10 and a length value 1 ms. Optionally, the length of the time unit may also be indicated by duration of transmitting the time domain synchronization instruction. For example, if time spent by the first device on receiving the time domain synchronization instruction is 1 ms, the first device may determine that the length of the time unit is 1 ms.

The time domain synchronization instruction may be a signal used for performing time domain synchronization, such as a synchronization signal, a synchronization reference signal, a synchronization signal, and a broadcast block. Alternatively, the time domain synchronization instruction may be configuration information, and the configuration information indicates information about time domain synchronization. The first device may perform time domain synchronization by receiving the time domain synchronization instruction.

The second device may divide time domain of the second device into a plurality of time units. The time unit may be one or more of a radio frame (radio frame), a subframe (subframe), a subframe set, a slot (slot), a slot set, a sub-slot (sub-slot), a sub-slot set, a symbol (symbol), and a symbol set. The sub-slot may also be referred to as a mini-slot, and the sub-slot set may also be referred to as a mini-slot set. One radio frame may include at least one subframe, one subframe may include at least one slot, one slot may include at least one sub-slot, and one sub-slot may include at least one symbol. For example, one second may include 100 radio frames, one millisecond may include one subframe, one radio frame may include 10 subframes, one subframe may further include two slots, one slot may further include two sub-slots, one sub-slot may further include two symbols, one slot may further include 14 symbols, and the like.

In step 101, the second device sends the time domain synchronization instruction to the first device, and correspondingly, the first device receives the time domain synchronization instruction sent by the second device. A plurality of reflection units in the first device may be classified into an active unit and a non-active unit. The active unit may include a baseband and/or a radio frequency circuit configured to receive a signal, and may receive a signal. The non-active unit may reflect the signal. For example, the first device may receive, through the active unit, the time domain synchronization instruction sent by the second device.

For example, as shown in FIG. 2, the reflection unit 032 in the first device 03 may include a non-active unit 032a and an active unit 032b, and the active unit 032b may be distributed at locations on four sides of a plurality of reflection units arranged in an array. The active unit 032b may include a group of basebands and/or radio frequencies used to receive the signal, so that the first device 031 may receive, through the active unit 032b, the time domain synchronization instruction sent by the second device.

It should be noted that in embodiments of this application, a quantity and distribution locations of active units and non-active units in the first device are not limited. In FIG. 2, only locations at which the active units 032b are distributed on four sides of the plurality of reflection units arranged in an array are used as an example. Definitely, the active units 032b may also be distributed at other locations of the plurality of reflection units arranged in the array.

Step 102. The first device performs time domain synchronization based on the time domain synchronization instruction.

After receiving the time domain synchronization instruction, the first device may parse the time domain synchronization instruction, to obtain information indicated by the time domain synchronization instruction. Then, time domain synchronization is performed based on the information indicated by the time domain synchronization instruction.

For example, it is assumed that information shown in the time domain synchronization instruction includes: the number of the time unit in which the second device is currently located and the length of each time unit. In this case, when performing time domain synchronization, the first device may set the length of the time unit of the first device to the length of the time unit indicated by the time domain synchronization instruction, set the number of the current time unit of the first device to the number of the current time unit indicated by the time domain synchronization instruction, and correspondingly set a number of a subsequent time unit.

For example, it is assumed that the information shown in the time domain synchronization instruction includes: the number 10 of the time unit in which the second device is currently located and the length 1 ms of the time unit. In this case, the first device may divide time domain of the first device into a plurality of time units whose lengths are 1 ms, and the first device may further set the number of the time unit in which the first device is currently located to 10, and correspondingly set numbers of subsequent time units to 11, 12, 13, and the like.

Step 103. The first device sends a time domain synchronization response to the second device. Correspondingly, the second device may receive the time domain synchronization response.

The active unit in the first device may include a baseband and/or a radio frequency circuit configured to send a signal, so that the active unit may send the signal. The first device may send the time domain synchronization response to the second device through the active unit.

The time domain synchronization response may be a pulse signal. Optionally, the time domain synchronization response may include identification information of the first device, and the second device may determine, based on the identification information in the time domain synchronization response, that the first device completes time domain synchronization with the second device. The identification information may be an identifier preconfigured by the first device, or may be an identifier allocated by the second device to the first device (for example, an identifier allocated by the second device to the first device before step 103).

Optionally, the second device may send the identification information to the first device, where the identification information identifies the first device.

Optionally, step 103 may also be omitted. In other words, the first device may not send the time domain synchronization response, and the second device may not receive the time domain synchronization response.

Step 104. The first device sends, to the second device, capability information indicating a processing capability of the first device. Correspondingly, the second device may receive the capability information indicating the processing capability of the first device.

Optionally, the capability information may include: duration required for switching a state of the first device from a current state to a first state. If the duration is long, the processing capability of the first device indicated by the capability information is low. If the duration is short, the processing capability of the first device indicated by the capability information is high.

Optionally, the capability information may refer to a capability of performing state switching by the first device, for example, including duration of performing state switching by the first device.

For example, the capability information may be duration, for example, X ms, where X is a real number. For example, 0.1 ms, 1 ms, and 10 ms.

For another example, the capability information may be a quantity of time units, for example, N symbols, M slots, and the like. Both N and M are integers. For example, three symbols, five symbols, one slot, or two slots, and the like.

In embodiments of this application, an example in which the capability information includes the duration required for switching a state of the first device from the current state to the first state is used. Certainly, the capability information may also be implemented in another manner. For example, the capability information includes information related to the duration (for example, code that indicates the duration), or the capability information includes code that indicates a processing capability level of the first device. This is not limited in embodiments of this application.

Step 105. The second device determines a frame structure based on the capability information.

The frame structure may include a receiving time unit and a reflection time unit, or the frame structure may include a receiving time unit, a processing time unit, and a reflection time unit. The receiving time unit is a time unit in which the second device sends the setting instruction, and correspondingly, is also a time unit in which the first device receives the setting instruction. The setting instruction indicates the first state. The processing time unit is a time unit in which the first device switches the current state to the first state. The reflection time unit is a time unit in which the first device reflects a signal based on the first state.

Optionally, the receiving time unit may include one or more time units. For example, the receiving time unit may be S symbols, N slots, M subframes, or the like. The reflection time unit may include one or more time units. For example, the reflection time unit may be S' symbols, N' slots, or M' subframes.

Optionally, the receiving time unit and the reflection time unit may be located in a same slot, or may be located in different slots, or may be located in a same subframe, or may be located in different subframes. On one hand, for a first device with a strong processing capability (for example, a processing capability indicated by the capability information is greater than or equal to a processing capability threshold), duration required for switching a state of the first device from the current state to the first state is very short (for example, the required duration is less than duration of one time unit). In this case, the frame structure determined by the second device in step 05 may not include the processing time unit, but includes only the receiving time unit and the reflection time unit. A process in which the first device switches from the current state to the first state may be performed at the end of the receiving time unit, or may be performed at the beginning of the reflection time unit.

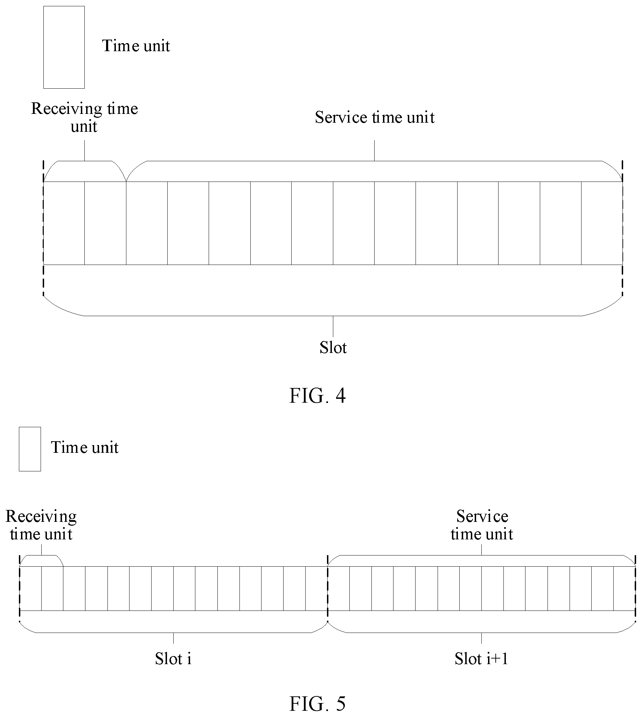

For example, FIG. 4 is a schematic diagram of a frame structure according to an embodiment of this application. Referring to FIG. 4, the frame structure may include 14 time units, and the first two time units are both receiving time units (to be specific, the frame structure includes one receiving time unit, and the receiving time unit includes two time units; or the frame structure includes two receiving time units, and each receiving time unit includes one time unit). The subsequent 12 time units are reflection time units (to be specific, the frame structure includes one reflection time unit, and the reflection time unit includes 12 time units; or the frame structure includes 12 reflection time units, and each reflection time unit includes one time unit). The receiving time unit and the reflection time unit are consecutive in time domain. To be specific, there is no time unit that is spaced between the receiving time unit and the reflection time unit. Still referring to FIG. 4, the receiving time unit and the reflection time unit are located in a same slot. In this case, the time units included in the receiving time unit and the reflection time unit may be sub-slots or symbols.

For example, FIG. 5 is a schematic diagram of another frame structure according to an embodiment of this application. Referring to FIG. 5, the frame structure may include 28 time units, and the first two time units are all receiving time units (to be specific, each frame structure includes one receiving time unit, and the receiving time unit includes two time units; or the frame structure includes two receiving time units, and each receiving time unit includes one time unit). A 15th time unit to a 28th time unit are reflection time units (to be specific, the frame structure includes one reflection time unit, and the reflection time unit includes 14 time units; or the frame structure includes 13 reflection time units, and each reflection time unit includes one time unit). In addition, there are 12 time units that are spaced between the receiving time unit and the reflection time unit. A quantity of time units between the receiving time unit and the reflection time unit may be predefined in a protocol, or may be notified by a second device to a first device through signaling. This is not limited in this application. Still referring to FIG. 5, the receiving time unit and the reflection time unit are located in different slots. In this case, the time unit may be a sub-slot or a symbol.

On the other hand, for the first device with a poor processing capability (for example, a processing capability indicated by capability information is lower than a processing capability threshold), time required for switching from a current state to a first state is long (for example, duration of at least one time unit is required). In this case, a frame structure determined by the second device includes: the receiving time unit, a processing time unit, and the reflection time unit, where the processing time unit is used to enable the first device to switch a state.

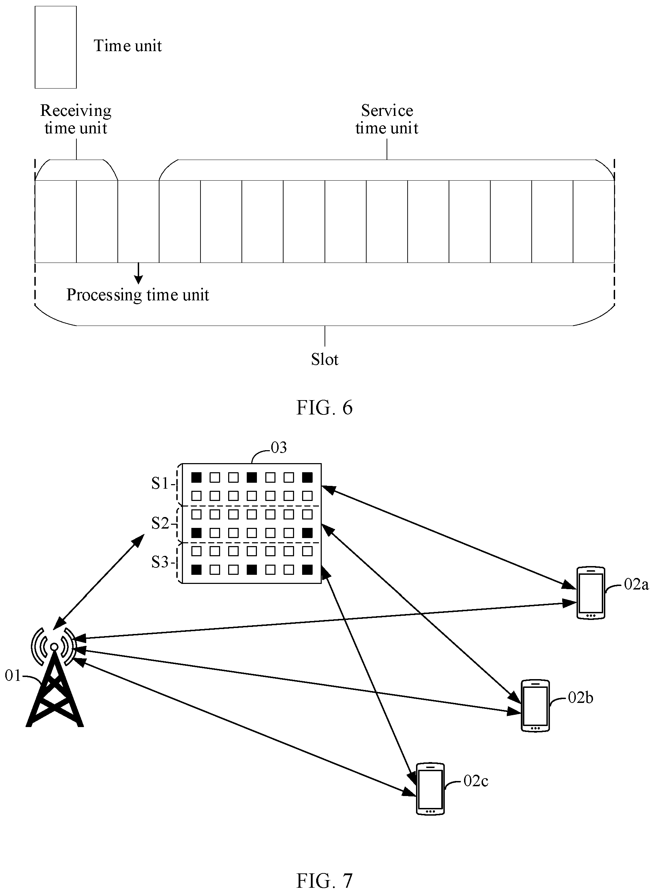

For example, FIG. 6 is a schematic diagram of still another frame structure according to an embodiment of this application. Referring to FIG. 6, the frame structure may include 14 time units. The first two time units are receiving time units, the last 11 time units are reflection time units, and one time unit between the receiving time unit and the reflection time unit is a processing time unit. In this case, the receiving time unit, the processing time unit, and the reflection time unit are consecutive in time domain. Optionally, there may be a time unit that is spaced between the processing time unit and the receiving time unit. A time unit of the interval may be predefined in a protocol, or may be notified by a second device to a first device through signaling. This is not limited in this application. In this case, after receiving a setting instruction in the receiving time unit, the first device may not need to immediately switch from a current state to a first state.

It should be noted that the frame structure may include more than one group of time units. Each group of time units includes: the receiving time unit and the reflection time unit, or each group of time units includes: the receiving time unit, the processing time unit, and the reflection time unit. In each group of time units, the receiving time unit is a time unit in which the second device receives the setting instruction, the processing time unit is a time unit in which the second device switches from the current state to the first state indicated by the setting instruction, and the reflection time unit is a time unit in which the second device reflects a signal based on the first state. The receiving time unit and the reflection time unit may be consecutive, or there may be time units that are spaced therebetween. The receiving time unit and the reflection time unit may be located in a same slot, or may be located in different slots. This is not limited in this application. FIG. 4 to FIG. 6 are merely examples, and the solutions in this application are not limited thereto.

Step 106. The second device sends information about at least one time unit in the frame structure to the first device. Correspondingly, the first device may receive the information about the at least one time unit in the frame structure.

Optionally, when the at least one time unit includes a plurality of time units, information about the plurality of time units may be jointly sent to the first device, or may be separately sent to the first device.

Optionally, information about the receiving time unit may include determining a location or number information about a time unit in which the receiving time unit is located. For example, a location of a slot at which the receiving time unit is located and a location of a symbol in a slot are determined, or a number of a slot in which the receiving time unit is located and a number of a symbol in a slot are determined. For example, the number of the slot in which the receiving time unit is located is a slot s, and the number of the symbol is a symbol 1.

Optionally, the information about the receiving time unit may include a receiving moment (a moment at which a setting instruction sent by the second device is received). For example, it is determined that the receiving moment is a time unit after 5s, a time unit after 5 minutes, or the like.

There may be a plurality of implementations of information about each of the at least one time unit, for example, at least one of the following manners may be used:

(1) The information about each time unit includes: start number information and/or end number information about the time unit. For example, when the at least one time unit includes the receiving time unit, if time units numbered 10 to 14 are the receiving time units, the information about the receiving time unit may include the number 10 and the number 14.
For example, when only the start number information is indicated, the end number information may be predefined in a protocol; or when only the end number information is indicated, the start number information may be predefined in a protocol.

(2) The information about each time unit includes: a start number of the time unit and/or a quantity of time units. For example, when the at least one time unit includes the receiving time unit, if the time units numbered 10 to 14 are the receiving time units, the information about the receiving time unit may include the number 10 and a quantity of receiving time units: 4.

For example, when only the start number information is indicated, a quantity of time units may be predefined in a protocol; or when only quantity information about time units is indicated, the start number information may be predefined in a protocol.

(3) In each group of time units in the frame structure, the information about each time unit other than the receiving time unit includes: a quantity of time units that are spaced between the time unit and a previous time unit, and/or a quantity of time units. For example, the time units numbered 10 to 14 are the receiving time units, and time units numbered 17 to 28 are the reflection time units. In this case, information about the reflection time units may include a quantity of time units that are spaced: 2, and a quantity of reflection time units: 12.

For example, when only the information about the quantity of time units that are spaced is indicated, the quantity of time units that are spaced may be predefined in a protocol; or when only the information about the quantity of time units that are spaced is indicated, the quantity of time units that are spaced may be predefined in a protocol.

(4) The information about the at least one time unit includes: start moment indication information about the at least one time unit, for example, after 5s or 5 minutes.

(5) The information about the at least one time unit does not include the information about the receiving time unit, and the information about the receiving time unit is predefined in a protocol.

(6) The information about the at least one time unit does not include the information about the reflection time unit, and the information about the reflection time unit is predefined in a protocol.

Optionally, step 106 may also be omitted. In other words, the second device may not send the information about the at least one time unit in the frame structure to the first device. Correspondingly, the first device may not receive the information about the at least one time unit in the frame structure and that is sent by the first device.
Optionally, the receiving time unit is the first W symbols of a slot, where W is a positive integer. For example, a value of W may be 1, 2, 3, or the like.
Optionally, to be compatible with an NR design and match an NR frame structure, the first W symbols of the slot may be designed as the receiving time unit. In the receiving time unit, the first device may receive the setting instruction sent by the second device. In an existing design of the NR, the first two to three symbols in one slot may be used to transmit a PDCCH, and subsequent symbols may be used to transmit a physical downlink shared channel (physical downlink shared channel, PDSCH).
For the receiving time unit, the first device may predefine or preset adjustment information (for example, a phase matrix). By adjusting the phase matrix, signal reliability or a system capacity may be improved. For example, in the receiving time unit, if the second device sends the PDCCH, the first device may preset the phase matrix, to improve signal reliability of a control channel.
Step 107. The first device determines the frame structure based on the information about the at least one time unit in the frame structure.
Optionally, after receiving the information about the at least one time unit in the frame structure sent by the second device, the first device may determine the at least one time unit based on the information about the at least one time unit.
Optionally, the first device and/or the second device may determine the frame structure based on the information about the at least one time unit predetermined in a protocol. The at least one time unit may include the receiving time unit or the reflection time unit, or the receiving time unit and the reflection time unit.
If the at least one time unit is all types of time units in the frame structure, after determining the at least one time unit, the first device may obtain the frame structure based on the at least one time unit.
If the frame structure further includes another time unit in addition to the at least one time unit, the first device further needs to determine the another time unit, to obtain the frame structure. Optionally, information about the another time unit may be preconfigured on the first device, and the first device may determine the another time unit based on the information about the another time unit.
Step 108. The second device obtains a setting instruction.
The second device may receive the setting instruction from the another device. For example, when the second device is a base station, the base station may receive a setting instruction sent by a core network device. Alternatively, the second device may determine, based on channel state information (channel state information, CSI), a state (referred to as a first state) required by the first device to reflect a specified signal between communication devices, to generate a setting instruction indicating the first state.
Optionally, step 108 may also be omitted. For example, the setting instruction is determined by the second device. In this case, the setting instruction does not need to be obtained from the another device. This may reduce information exchange between devices and improve communication efficiency.
It should be noted that when the first device reflects a signal, at least some of a plurality of reflection units of the first device may adjust a parameter of the signal. In different states of the first device, the at least some reflection units adjust the parameter of the signal in different statuses. The parameter of the signal may include: at least one of a phase, an amplitude, an angle of reflection, an angle of arrival, an angle of offset, a quantity of beams, and a beam angle. Correspondingly, the setting instruction may include: adjustment information for the parameter (such as the phase, the amplitude, the angle of reflection, the angle of arrival, the angle of offset, the quantity of beams, and the beam angle) of the signal by the at least some reflection units when the first device is in the first state.

Because the setting instruction may include the adjustment information for the parameter of the signal by the first device in the first state, the setting instruction may indicate the first state. The first state may include: a reflection state (for example, whether a signal is reflected and an angle during reflection), a phase state (for example, a phase of a reflected signal), an amplitude state (for example, an amplitude of the reflected signal), a beam state (for example, a quantity and an angle of beams of the reflected signal), and the like.

For example, the adjustment information in the setting instruction may include: a reflection state matrix, where elements in the reflection state matrix are in a one-to-one correspondence with a plurality of reflection units arranged in an array in the first device, each element in the reflection state matrix indicates a reflection state of a corresponding reflection unit for a signal, and the reflection state may include an on state or an off state. The plurality of reflection units may be some reflection units in the first device. Optionally, the setting instruction may indicate the adjustment information.

The off state refers to that the reflection unit does not reflect the signal based on a physical attribute of the reflection unit. In this case, the first device is equivalent to an obstacle between the communication devices. The open state may include: at least one state of total absorption, partial reflection, diffuse reflection, and reflection at a specific angle. The total absorption refers to that the reflection unit absorbs all incident signals. The partial reflection refers to that the reflection unit reflects only some signals in the incident signals. The diffuse reflection refers to that the reflection unit reflects a signal in different directions irregularly. The reflection refers to that the reflection unit reflects the signal based on a reflection angle equal to an incident angle. The reflection at a specific angle refers to that only an incident signal at a specific angle is reflected, or the signal is reflected only to a specific angle. In this case, elements in the reflection state matrix may include an adjustment amount of a reflection angle, an angle of arrival, and an offset angle that are of the reflection unit for the signal.

For another example, the adjustment information in the setting instruction may include: a phase adjustment matrix, elements in the phase adjustment matrix are in a one-to-one correspondence with the plurality of reflection units arranged in the array in the first device, and each element in the phase adjustment matrix indicates an adjustment amount (for example, 30°, 60°, 90°, 120°, 150°, or 180°) of a phase of a signal by a corresponding reflection unit. The plurality of reflection units may be some reflection units in the first device.

For another example, the adjustment information in the setting instruction may include: an amplitude adjustment matrix, elements in the amplitude adjustment matrix are in a one-to-one correspondence with the plurality of reflection units arranged in the array in the first device, and each element in the amplitude adjustment matrix indicates an adjustment amount of an amplitude of a signal by a corresponding reflection unit. The plurality of reflection units may be some reflection units in the first device.

For another example, the adjustment information in the setting instruction may include a beam adjustment state, and the beam adjustment state may be related to a quantity of beams and a beam angle of a reflected signal of the first device. The first device may form one or more beams at one moment/time unit. A beam of the reflected signal of the first device may be a single beam, a dual beam, or a four-beam. The first device, in different states, may form different directions and different quantities of beams. It should be understood that the quantity of beams and the beam angle of the reflected signal of the first device are jointly determined by a plurality of reflection units in the first device by adjusting a phase, an amplitude, and an angle of the signal. Therefore, the beam adjustment state is related to a phase state, an amplitude state, and a reflection state. The plurality of reflection units may be some reflection units in the first device.

It should be further understood that the adjustment information in the setting instruction may be implemented through encoding. For example, elements in the reflection state matrix, the phase adjustment matrix, and the amplitude adjustment matrix may all be encoding, for example, binary encoding. There is a mapping relationship between the binary encoding and the information in the setting instruction. The mapping relationship may be predefined in a protocol, or may be notified by the second device to the first device through signaling. For example, higher layer signaling or physical layer signaling. For example, if two-bit encoding is used for the phase adjustment amount, encoding values of the phase adjustment amount may be 00, 01, 10, and 11, and the four encoding values respectively represent four different phase adjustment amounts.

Step 109. The second device sends the setting instruction to the first device based on the frame structure. Correspondingly, the first device may receive the setting instruction.

After determining the frame structure and obtaining the setting instruction, the second device may send the setting instruction to the first device in the receiving time unit in the frame structure, so that the first device receives the setting instruction in the receiving time unit.

The first device may receive the setting instruction through at least one active unit in the plurality of reflection units.

Optionally, the setting instruction may be the higher layer signaling, or may be the physical layer signaling.

For example, a MAC layer of the first device communicates with a MAC layer of the second device, and/or an RRC layer of the first device communicates with an RRC layer of the second device, and/or a physical layer (PHY layer) of the first device communicates with a physical layer of the second device.

Optionally, the second device may also be used as a terminal, and the first device may send control information (for example, downlink control information) to the second device, where the control information includes the setting instruction.

Step 110. The first device switches a state of the first device from a current state to a first state based on the frame structure and the setting instruction.

After receiving the setting instruction, the first device needs to first parse (for example, perform operations such as decoding and decoding) the setting instruction, determine a setting parameter corresponding to the first state based on an indication of an adjustment information field in the setting instruction, and then switch the state of the first device to the first state based on the setting parameter.

When the frame structure includes only the receiving time unit and the reflection time unit, the first device may switch a state of the first device from the current state to the first state at the end of the receiving time unit or at the start of the reflection time unit.

When the frame structure includes not only the receiving time unit and the reflection time unit, but also the processing time unit, the first device may switch a state of the first device from the current state to the first state in the processing time unit.

It should be noted that the switching the state of the first device to the first state based on the setting parameter may be performed by a controller in the first device. As shown in FIG. 2, a controller 031 is connected to a reflection unit array, and may set states of at least some of a plurality of reflection units (032a or 032b), so that the state of the first device is switched to the first state.

Step 111. The first device reflects a signal based on the frame structure and the first state.

The first device may reflect the signal in the reflection time unit in the frame structure through at least some of the plurality of reflection units. The at least some reflection units may include some or all non-active units (the non-active units may reflect the signal), or may include some active units (the active units may also be configured to reflect the signal). This is not limited in embodiments of this application.

When the first device reflects the signal, a reflection unit configured to reflect the signal may adjust the parameter (such as an angle, a phase, or an amplitude) of the signal. For example, it is assumed that after the first device switches to the first state, an adjustment amount of a phase of the signal by a reflection unit of a reflected signal in the first state is 30°. In this case, the reflection unit adjusts a phase of an incident signal by 30° and then reflects the incident signal.

The first device may reflect, in the reflection time unit, a signal transmitted between the communication devices, to assist in signal transmission between the communication devices. For example, a communication system further includes a third device. The first device may be configured to reflect a signal transmitted between the second device and the third device. A quantity of second devices and a quantity of third devices are not limited herein.

According to the foregoing embodiments, the first device may flexibly adjust a channel or a signal between communication. This improves communication performance.

For example, an example in which the second device is a base station and the third device is a UE is used. FIG. 7 is an example of a schematic diagram of communication between a base station 01 and three UEs 02. As shown in FIG. 7, a reflection unit of the first device 03 may be configured to reflect a signal transmitted between the base station 01 and each UE 02. The three UEs 02 are respectively referred to as 02a, 02b, and 02c.

Because location relationships between each UE 02 and the base station 01 are different, corresponding states are different when the reflection unit of the first device 03 reflects a signal for each UE 02. It is assumed that when the first device 03 reflects the signal transmitted between the base station 01 and the UE 02a, a state corresponding to the reflection unit is a; when the first device 03 reflects the signal transmitted between the base station 01 and the UE 02b, a state corresponding to the reflection unit is b; and when the first device 03 reflects the signal transmitted between the base station 01 and the UE 02c, a state corresponding to the reflection unit is c.

Optionally, there is a correspondence between adjustment information and the reflection time unit. A description is made below by using an example in which the adjustment information is a phase matrix $\varphi 1$, a phase matrix $\varphi 2$, and a phase matrix $\varphi 3$, and the reflection time unit is a time unit A1, a time unit A2, and a time unit A3.

Optionally, the setting instruction may include the adjustment information and information about the reflection time unit.

For example, a reflection time unit corresponding to the phase matrix $\varphi 1$ is the time unit A1, a reflection time unit corresponding to the phase matrix $\varphi 2$ is the time unit A2, and a reflection time unit corresponding to the phase matrix $\varphi 3$ is the time unit A3.

For example, if the base station communicates with a UE1 in the time unit A1, a phase matrix of the first device is set to $\varphi1$; if the base station communicates with a UE2 in the time unit A2, a phase matrix of the first device is set to $\varphi2$; and if the base station communicates with a UE3 in the time unit A3, a phase matrix of the first device is set to $\varphi3$.

The second device may control, by using the method provided in embodiments of this application based on a signal that needs to be reflected by the first device, a reflection unit that is in the first device and that is used to reflect the signal to be in a specific state.

In addition, in embodiments of this application, an example in which the first device is configured to reflect signals between a group of devices (each group of devices includes two devices that communicate with each other) at a same moment is used. In this case, if the second device needs to control the first device to reflect the signals between a plurality of groups of devices, the second device may sequentially control the first device to reflect the signals between the plurality of groups of devices.

For example, FIG. 7 is used as an example. The base station 01 and the UE 02a are a first group of devices, the base station 01 and the UE 02b are a second group of devices, and the base station 01 and the UE 02c are a third group of devices. The second device may first control the reflection unit in the first device to be in the foregoing state a by using the method provided in embodiments of this application, so that the first device may reflect the signal transmitted between the base station 01 and the UE 02a. Then, the second device may control the reflection unit in the first device to be in the foregoing state b, so that the first device may reflect the signal transmitted between the base station 01 and the UE 02b. Finally, the second device may control the reflection unit in the first device to be in the state c, so that the first device may reflect the signal transmitted between the base station 01 and the UE 02c.

It should be noted that when the first device reflects signals for a plurality of groups of communication devices, the frame structure may include a plurality of groups of time units, each group of time units corresponds to a group of communication devices, and the first device may perform communication based on a group of time units corresponding to each group of communication devices, to reflect the signals transmitted between the group of communication devices. Optionally, a plurality of receiving time units in the plurality of groups of time units are sequentially arranged in time domain. However, in embodiments of this application, locations of processing time units in the plurality of groups of time units in time domain, and locations of reflection time units in the plurality of groups of time units in time domain are not limited. For example, a processing time unit and/or a reflection time unit in a first group of time units may overlap a receiving time unit in a second group of time units.

Optionally, in embodiments of this application, the first device may also be configured to reflect the signals between the plurality of groups of devices (each group of devices includes two devices that communicate with each other) at a same moment. For example, when there is a large quantity of reflection units that are of the first device and that are used to reflect the signal, a reflection unit of the first device may also be set to an operating state in an area. For example, a plurality of reflection units arranged in an array in the first device may be divided into a plurality of areas, the plurality of areas may correspond to the plurality of groups of devices, and a reflection unit in each area is configured to reflect the signals transmitted between the group of devices corresponding to the area. In this case, the first device may simultaneously reflect signals for a plurality of different communication devices, to simultaneously assist communication between the plurality of different communication devices. This improves communication performance in multi-user multiplexing.

For example, referring to FIG. 7, the plurality of reflection units in the first device 03 may be divided into three areas: S1, S2, and S3. S1 is used to reflect the signal between the base station 01 and the UE 02a, S2 is used to reflect the signal between the base station 01 and the UE 02b, and S3 is used to reflect the signal between the base station 01 and the UE 02c. The first device may switch to the first state based on control of the second device, so that a reflection unit of the area S1 is in the state a, a reflection unit of the area S2 is in the state b, and a reflection unit of the area S3 is in the state c. In this way, the first device 03 may simultaneously reflect, in a same reflection time unit, the signals transmitted between the base station 01 and the UE 02a, between the base station 01 and the UE 02b, and between the base station 01 and the UE 02c. This improves performance when the base station simultaneously communicates with a plurality of user equipments.

Optionally, the signal reflected by the first device between the communication devices may include an uplink signal (for example, a signal sent by the UE to the base station), and/or a downlink signal (for example, a signal sent by the base station to the UE). Correspondingly, the reflection time unit may include an uplink time unit and a downlink time unit. In the uplink time unit, the reflection unit of the first device may reflect the uplink signal, and assist in transmitting the uplink signal. In the downlink time unit, the reflection unit of the first device may reflect the downlink signal, and assist in transmitting the downlink signal.

Optionally, the receiving time unit may be the downlink time unit, and the reflection time unit may include the downlink time unit and/or the uplink time unit.

For example, the reflection time unit may be a downlink symbol, a downlink slot, or a downlink subframe in communication between the base station and the UE, or may be an uplink symbol, an uplink slot, or an uplink subframe in communication between the base station and the UE.

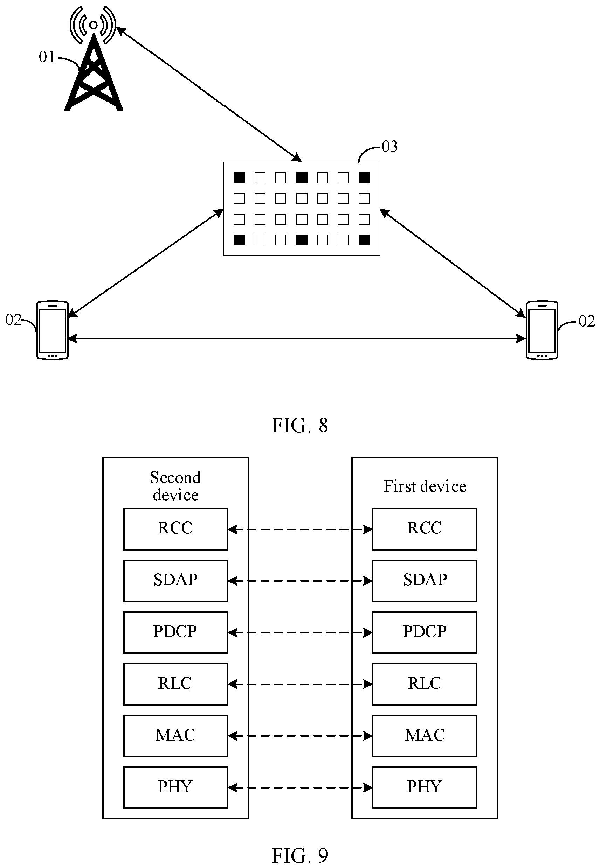

Optionally, after the first device switches the state of the first device from the current state to the first state based on the setting instruction sent by the second device, the first device may reflect, in the first state, the signal transmitted between the communication devices other than the second device. In this case, the setting instruction is not sent to the first device by the communication device that transmits the signal. For example, as shown in FIG. 8, the reflection unit in the first device 03 is configured to reflect a signal transmitted between the two UEs 02, and the setting instruction may be sent by the second device 01 to the first device 03.

It should be noted that the second device may include: a controller and a plurality of reflection units. In the foregoing embodiments, an action related to communication of the second device (for example, an action related to the first device in step 101) may be performed by the controller through the active reflection unit. In the foregoing embodiments, an action unrelated to communication (for example, an action in step 102) performed by the first device may be performed by the controller.

It should be further noted that a sequence of steps of a communication method provided in embodiments of this application may be properly adjusted, or steps may be correspondingly added or deleted based on a situation. For example, step 104 may alternatively be performed before step 101, to be specific, the capability information may be sent to the second device before time domain synchronization; step 104 and step 107 may be deleted based on a situation, to be specific, the first device may not need to send the capability information to the second device, or the second device does not need to determine the frame structure based on the capability information, and the frame structure may be preset on the first device; and for example, any one of step 101 to step 106 may be deleted. For example, in a scenario in which a time domain synchronization requirement is not strict, time domain synchronization may not be performed. For another example, information about at least one time unit in the frame structure may be predefined in a protocol, and therefore, information exchange may not be performed. Any variation method readily figured out by a person skilled in the art within the technical scope disclosed in this application shall fall within the protection scope of this application. Therefore, details are not described herein.

In summary, embodiments of this application provide a communication method. The first device may determine the frame structure and perform communication based on the frame structure, so that the first device may receive, in the receiving time unit, the setting instruction indicating the first state, and reflect the signal based on the first state in the reflection time unit. It may be learned that in the solution of this application, the first device may perform communication based on the determined frame structure, so that the first device may receive a setting instruction sent by a second device, and reflect the signal based on the first state indicated by the setting instruction. Therefore, flexibility of the first device is high. When the first device is an IRS, flexibility of the IRS is high, and the IRS may be applied to a plurality of scenarios. This improves communication performance.

In addition, because the reflection unit in the first device may simultaneously reflect the signals transmitted between the different communication devices, communication performance in multi-user multiplexing may be improved.

Optionally, the receiving time unit in embodiments of this application may also be referred to as an answering time unit, the processing time unit may also be referred to as a switching time unit, the reflection time unit may also be referred to as a service time unit, and the setting instruction may also be referred to as setting signaling. These names are not limited in embodiments of this application.

Optionally, different types of first devices may correspond to different interface protocols between the second device and the first device. For example, a communication interface between the second device and the first device corresponding to a first device of a first type is an Xn interface; a communication interface between the second device and the first device corresponding to a first device of a second type is a Uu interface; and a communication interface between the second device and the first device corresponding to a first device of a third type is no interface. The first type, the second type, and the third type may be at least one of the types of the first device described below.

It should be noted that the first device generally includes two types: a first device that operates independently and a first device that does not operate independently.

The first device that operates independently may not have an interface that communicates with an external device, and does not have a capability of being controlled by the external device. The first device reflects a signal based on a preset operating state. In this case, a status of adjusting the signal of the first device is fixed, and flexibility is poor.

The first device that does not operate independently may have an interface that communicates with the external device, and has the capability of being controlled by the external device. The first device that does not operate independently may also be classified into four types.

The reflection unit in the first device does not include a baseband or a radio frequency, cannot receive or send the signal, and can only reflect the signal. It is assumed that the external device is the base station, and an interface that performs communication between the first device and the base station may be referred to as the Xn interface;

at least some reflection units in another first device include a group of basebands and/or radio frequencies used to receive the signal. The first device may receive the signal and reflect the signal, but cannot send the signal. It is assumed that the external device is the base station, in this case, an interface that performs communication between the first device and the base station is referred to as the Uu interface; at least some reflection units in another first device include a group of basebands and/or radio frequencies used to receive the signal. The first device may send the signal and reflect the signal, but cannot receive the signal. It is assumed that the external device is the base station, in this case, the interface that performs communication between the first device and the base station is referred to as the Uu interface; and

at least some reflection units in another first device include two groups of basebands and/or radio frequencies, where one group of basebands and/or radio frequencies is used to receive the signal, and the other group of basebands and/or radio frequencies is used to send the signal. The first device may receive the signal, send the signal, and reflect the signal. It is assumed that the external device is the base station, the interface that performs communication between the first device and the base station is referred to as the Uu interface. Optionally, the baseband and/or the radio frequency that sends the signal may be the same as or different from the baseband and/or the radio frequency that receives the signal.

The at least some reflection units in the first device provided in the foregoing embodiments of this application may include two groups of basebands and/or radio frequencies. The first device may receive the signal, reflect the signal, and send the signal. In addition, the first device has the capability of being controlled by the external device. For example, the first device may adjust the operating state of the reflection unit under control of an external second device.

The at least some reflection units in the first device provided in the foregoing embodiments of this application may include one group of basebands and/or radio frequencies. The first device may receive the signal and reflect the signal. In addition, the first device has the capability of being controlled by the external device. For example, the first device may adjust the operating state of the reflection unit under control of an external second device.

The following embodiment provides a method for determining a frame structure by a first device. The method may be used as an independent embodiment, or may be combined with another embodiment in this application. This is not limited in this application.

The first device may determine the frame structure in at least one of the following manners. The determining a frame structure includes determining at least one time unit in the frame structure.

Optionally, different types of time units may be determined in different manners. For example, the receiving time unit is determined in a manner B, and the reflection time unit is determined in a manner A; the receiving time unit is determined in a manner A, and the reflection time unit is determined in a manner C; or the receiving time unit is determined in a manner B, and the reflection time unit is determined in a manner C. Alternatively, in another manner, this is not limited in this application.

Manner A: a signaling indication.

In the foregoing embodiments of this application, the first device may determine the at least one time unit based on the information about the at least one time unit and that is sent by the second device.
In the manner, the time unit may be flexibly determined, to implement communication flexibility and improve communication performance.

Manner B: predefinition.

Optionally, the at least one time unit may also be predefined on the first device. In other words, the at least one time unit is recorded on the first device in advance. For example, the first device may predefine that periodicity of each of the at least one time unit is P ms/second (second, s)/minute (minute, min)/hour (hour, h), and the like, and duration of the time unit is N symbols/slots/subframes/radio frames. In the manner, overheads of information transmitted between the first device and the second device may be reduced.

Manner C: predefinition and a signaling indication.

Optionally, the at least one time unit may alternatively be determined by the first device based on locally predefined information and the information about the at least one time unit and that is sent by the second device. For example, a person skilled in the art may predefine a target time period (for example, a slot, a subframe, or a radio frame) in which each of the at least one time unit is located, and information about the time unit and that is sent by the second device to the first device may indicate: a specific location of the time unit in the target time period. In the manner, overheads of information transmitted between the first device and the second device may also be reduced, and there is also flexibility.
It should be noted that because a subcarrier spacing is related to a length of a symbol, lengths of symbols may be different in different subcarrier spacings, and lengths of time units (including at least one symbol) may also be different in different subcarrier spacings. In different subcarrier spacings, a quantity of time units included in same duration may be different. Therefore, the second device may determine the information about the receiving time unit based on the subcarrier spacing and duration required for sending the setting instruction, and/or determine the information about the reflection time unit based on the subcarrier spacing and duration for reflecting the signal by the reflection unit of the second device in the first state. When the second device determines the processing time unit, the second device may further determine the information about the processing time unit based on the subcarrier spacing and duration required for switching a state of the first device from the current state to the first state.

The information about the receiving time unit may be at least one of duration of the receiving time unit, a quantity of time units included in the receiving time unit, a location of the receiving time unit, and the like.

The information about the reflection time unit may be at least one of duration of the reflection time unit, a quantity of time units included in the reflection time unit, a location of the reflection time unit, and the like.

The information about the processing time unit may be at least one of duration of the processing time unit, a quantity of time units included in the processing time unit, a location of the processing time unit, and the like.

For example, it is assumed that the first device determines that duration required by a setting parameter is T, and a length of the time unit is a reciprocal of a subcarrier spacing. When the subcarrier spacing is 15 kilohertz (kilohertz, kHz), if the length of the time unit is

$$\frac{1}{15\text{kHz}}$$

, a quantity of processing time units that need to be determined by the second device is 15T. When the subcarrier spacing is 30 kHz, if the length of the time unit

is $\frac{1}{30\text{kHz}}$ , a quantity of processing time units that need to be determined by the second device is 30T. When the subcarrier spacing is 60 kHz, if the length of the time unit

is $\frac{1}{60\text{kHz}}$ , a quantity of processing time units that need to be determined by the second device is 60T. Therefore, it may be learned that in different subcarrier spacings, that quantities of processing time units determined by the second device are different.

For example, it is assumed that the first device determines that the duration required by the setting parameter is T, and the time unit is a slot. When the subcarrier spacing is 15 kHz, if the length of the time unit is about 1 ms, a quantity of processing time units that need to be determined by the second device is T. When the subcarrier spacing is 30 kHz, if the length of the time unit is about 0.5 ms, a quantity of processing time units that need to be determined by the second device is 2T. When the subcarrier spacing is 60 kHz, if the length of the time unit is about 0.25 ms, a quantity of processing time units that need to be determined by the second device is 4T. Therefore, it may be learned that in different subcarrier spacings, the second device determines different quantities of processing time units.

In embodiments provided in this application, the first device and the second device need to communicate with each other. For example, in step 101, step 103, step 104, step 106, and step 108, the first device and the second device need to communicate with each other. The first device and the second device may communicate with each other through any protocol layer.

As shown in FIG. 9, both a second device and a first device may include one or more of the following protocol layers: a PHY layer, a MAC layer, an RLC layer, a PDCP layer, a service data adaptation protocol (service data adaptation protocol, SDAP) layer, and an RRC layer. For example, the RRC layer of the second device may communicate with the RRC layer of the first device, or the physical layer of the second device may communicate with the physical layer of the first device.

Optionally, the receiving time unit in the foregoing embodiments of this application is a downlink time unit. In the downlink time unit, the second device may send downlink control information (downlink control information, DCI) to the first device through a PDCCH, and the downlink control information carries a setting instruction. It should be understood that the second device may alternatively send, to the first device in a downlink time unit before the receiving time unit, the downlink control information that carries a time domain synchronization instruction or information about a receiving/processing/reflection time unit.

The following embodiment describes a method for determining a first state in the receiving time unit, which may be at least one of the following manners:

Manner 1: presetting a first state.

For a control channel, the second device may preset a phase matrix in advance and notify the first device of the preset phase matrix, or determine the first state in a predefined manner.

For example, the first state may be phase adjustment at a fixed angle, for example, 90° or 30°. The first state may also be a fixed phase state, for example, all 0 or all 1.

For example, based on an IRS deployment scenario, an IRS may have a preset reflection direction, and the phase matrix may be determined based on the deployment.

Manner 2: determining the first state based on the received signaling.

For example, if the receiving time unit includes a time unit t1, a setting instruction in the receiving time unit may indicate a first state of the first device in a time unit t2 and a time unit t3, where the time unit t2 and the time unit t3 are after the time unit t1. If the PDCCH is transmitted in the time unit t2 and the time unit t3, a signal of a control channel may be reflected based on the indicated first state. This improves reliability of the signal of the control channel.

Optionally, t2 and t3 may include a time unit t1', where the time unit t1' is the receiving time unit, and the time unit t1' is after the time unit t1.

According to the foregoing embodiments, the first state in the receiving time unit may be flexibly determined, and the first state may be applied to a plurality of scenarios. This improves communication performance of a signal in the receiving time unit.

The foregoing embodiments may be used as independent embodiments, or may be combined with another embodiment in this application. This is not limited in this application.

According to the foregoing embodiments, the IRS and a base station may exchange signaling in a time unit of a frame structure, and the IRS may perform phase matrix adjustment and reflect a signal in the time unit of the frame structure. This improves signal reliability or a system capacity.

According to the solution in embodiments of this application, in addition to directly arriving at a UE from the base station, the signal may further arrive at the UE after being reflected by the first device from the base station. Therefore, the signal has a diversity effect, and signal reliability may be improved. The first device may be the IRS.

In addition, in addition to a direct path from the base station to the UE, a path through which the signal passes may further include a path that is reflected by the base station to the UE through the first device. Therefore, a quantity of channel ranks may be increased, to be specific, multi-stream transmission and spatial multiplexing of a plurality of data streams may be performed. This improves the system capacity.

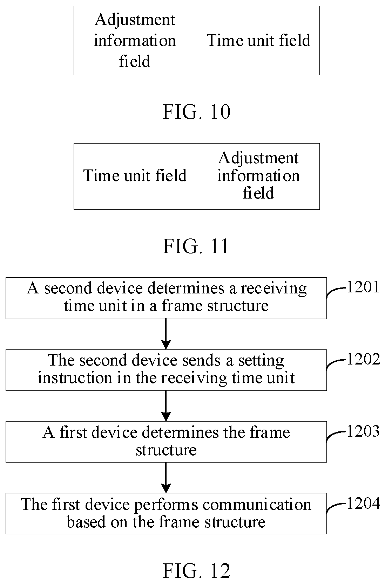

It should be noted that information about various time units in embodiments of this application may be provided by the second device for the first device, or may be preconfigured on the first device. When information about a time unit is provided by the second device for the first device, the information about the time unit may be information separately sent by the second device to the first device, or the information about the time unit may be carried in other information (for example, the foregoing setting instruction) sent by the second device to the first device. For example, the setting instruction in the foregoing embodiments of this application may further include information about a reflection time unit in addition to adjustment information for a parameter of the signal. Referring to FIG. 10, a setting instruction may include an adjustment information field (carrying adjustment information for a parameter of a signal of at least some reflection units). In addition, the setting instruction may further include a time unit field, and the time unit field is used to carry information about a reflection time unit. The information about the reflection time unit may be information about a time unit corresponding to a first state or the adjustment information. Optionally, the adjustment information indicates a state of a first device.

Optionally, there is a correspondence between the adjustment information and the time unit.

For example, the time unit may be S* symbols, N* slots, or M* subframes. The setting instruction includes adjustment information corresponding to the S* symbols, the N* slots, or the M* subframes.

For example, a base station may indicate one or more pieces of adjustment information to the first device, for example, first adjustment information and second adjustment information. In addition, the base station also indicates one or more pieces of time unit information to the first device, for example, first time unit information and second time unit information. In this case, the first adjustment information may correspond to the first time unit information, and the second adjustment information corresponds to the second time unit information. In other words, it may indicate that the state of the first device in a time unit indicated by the first time unit information is a state indicated by the first adjustment information, and the state of the first device in a time unit indicated by the second time unit information is a state indicated by the second adjustment information. Alternatively, it may indicate that an operating time unit corresponding to the state indicated by the first adjustment information is the time unit indicated by the first time unit information, and an operating time unit corresponding to the state indicated by the second adjustment information is the time unit indicated by the second time unit information.

Still referring to FIG. 10, the adjustment information field may be before the time unit field. Alternatively, as shown in FIG. 11, the time unit field may be before the adjustment information field.

According to the foregoing solution, one setting instruction may include one or more pieces of state information about the first device, and one or more pieces of corresponding time unit information. In this way, the state of the first device is flexibly adjusted, an indication delay is reduced, a joint indication improves efficiency, and communication performance is improved.

FIG. 12 is a schematic diagram of a communication method according to an embodiment of this application. Embodiments of this application may be used as independent embodiments, or may be combined with another embodiment of this application. This is not limited in this application. As shown in FIG. 12, the communication method may include the following steps.

Step 1201. A second device determines a receiving time unit in a frame structure. The receiving time unit is a time unit in which the second device sends a setting instruction, and the setting instruction indicates a first state.

For step 1201, refer to a part related to determining the receiving time unit in step 105. Details are not described herein again.

Step 1202. The second device sends a setting instruction in the receiving time unit.

For step 1202, refer to step 109. Details are not described herein again.

Step 1203. A first device determines the frame structure. The frame structure includes a receiving time unit and a reflection time unit; the receiving time unit is a time unit in which the first device receives a setting instruction, and the setting instruction indicates a first state; and the reflection time unit is a time unit in which the first device reflects a signal based on the first state.

For step 1203, refer to step 107. Details are not described herein again.

In step 1203, the first device needs to separately determine various time units in the frame structure, for example, the receiving time unit and the reflection time unit. For a manner in which the first device determines various time units, refer to related descriptions in the embodiment shown in FIG. 3. Details are not described herein again in this application.

Optionally, when the setting instruction carries information about the reflection time unit, the first device may determine the reflection time unit based on the setting instruction. Optionally, the setting instruction does not carry the information about the reflection time unit, and the reflection time unit may be preconfigured on the first device or predefined in a protocol. This is not limited in embodiments of this application. In addition, a sequence of determining the receiving time unit by the first device and step 1201 is not limited, and may be simultaneously performed, or may be performed before step 1201 when the first device determines the receiving time unit.

Step 1204. The first device performs communication based on the frame structure.

When performing communication based on the frame structure, the first device may receive, in the receiving time unit in the frame structure, the setting instruction sent by the second device in step 1203. The first device may further determine the reflection time unit in the frame structure, and reflect a signal in the reflection time unit based on the first state.

For step 1204, refer to content related to receiving the setting instruction by the first device in step 109 and step 111. Details are not described herein again in this application.

A description is made from a perspective of the second device, and a procedure of the communication method in embodiments of this application includes the following steps.

Step 1201'. The second device determines the receiving time unit in the frame structure. The receiving time unit is a time unit in which the second device sends a setting instruction, and the setting instruction indicates a first state.

For step 1201', refer to step 1201. Details are not described herein again.

Step 1202'. The second device sends the setting instruction based on the receiving time unit.

For step 1202', refer to step 1202. Details are not described herein again.

A description is made from a perspective of the first device, and a procedure of the communication method in embodiments of this application includes:

Step 1201*. The first device determines a frame structure, where the frame structure includes a receiving time unit and a reflection time unit; the receiving time unit is a time unit in which the first device receives a setting instruction, and the setting instruction indicates a first state; and the reflection time unit is a time unit in which the first device reflects a signal based on the first state.

For step 1201*, refer to step 1203. Details are not described herein again.

Step 1202*. The first device performs communication based on the frame structure.

For step 1202*, refer to step 1204. Details are not described herein again.

In the solution of this application, the first device may perform communication based on the determined frame structure, so that the first device may receive a setting instruction sent by a second device, and reflect the signal based on the first state indicated by the setting instruction. Therefore, flexibility of the first device is high, and the first device may be applied to a plurality of scenarios. This improves communication performance.

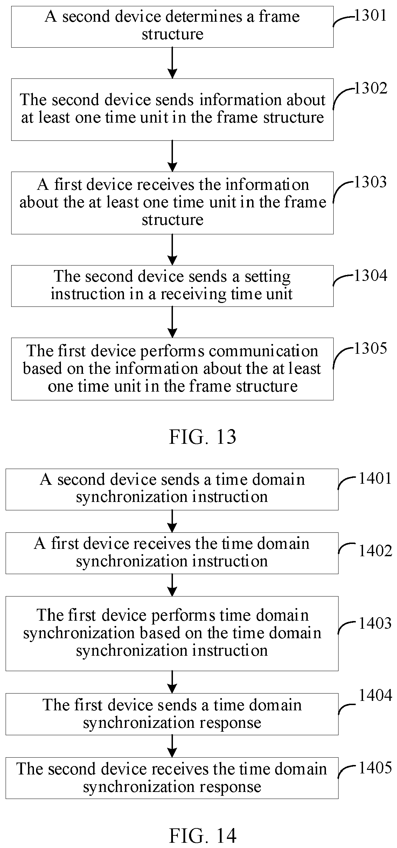

FIG. 13 is a schematic diagram of a communication method according to an embodiment of this application. Embodiments of this application may be used as independent embodiments, or may be combined with another embodiment of this application. This is not limited in this application. As shown in FIG. 13, the communication method may include the following steps.

Step 1301. A second device determines a frame structure.

For step 1301, refer to step 105. Details are not described herein again.

Step 1302. The second device sends information about at least one time unit in the frame structure.

For step 1302, refer to content related to that the second device sends the information about the at least one time unit in step 106. Details are not described herein again.

Step 1303. A first device receives the information about the at least one time unit in the frame structure.

For step 1303, refer to content related to that the first device receives the information about the at least one time unit in step 106. Details are not described herein again.

Step 1304. The second device sends a setting instruction in the receiving time unit.

For a specific operation, refer to step 109. Details are not described herein again.

Step 1305. The first device performs communication based on the information about the at least one time unit in the frame structure.

The frame structure includes a receiving time unit and a reflection time unit; the receiving time unit is a time unit in which the first device receives a setting instruction, and the setting instruction indicates a first state; and the reflection time unit is a time unit in which the first device reflects a signal based on the first state; and

Optionally, in step 1305, the first device may determine the frame structure based on the information about the at least one time unit received in step 1303, and then perform communication based on the frame structure. For example, the first device receives the setting instruction in the receiving time unit in the frame structure, and the reflection time unit in the frame structure reflects the signal based on the first state indicated by the setting instruction.

Optionally, in step 1305, the first device may determine the at least one time unit in the frame structure based on the information about the at least one time unit received in step 1303. The at least one time unit includes the receiving time unit. In this case, the first device may receive the setting instruction based on the receiving time unit. Optionally, the setting instruction may carry the information about the reflection time unit. In this case, the first device may determine the reflection time unit in the frame structure based on the information about the reflection time unit carried in the setting instruction, and further reflect the signal based on the reflection time unit and the first state indicated by the setting instruction. In this case, the first device determines the frame structure based on the received information about the at least one time unit and the setting instruction, and performs communication based on the information about the at least one time unit and the setting instruction.

For step 1305, refer to content of communicating with the first device in step 107, step 109, and step 111. Details are not described herein again.

A description is made from a perspective of the first device, and a procedure of the communication method in embodiments of this application includes:

Step 1301'. The first device receives the information about the at least one time unit in the frame structure.

For step 1301', refer to step 1303. Details are not described herein again.

Step 1302'. The first device performs communication based on the information about the at least one time unit in the frame structure.

For step 1302', refer to step 1305. Details are not described herein again.

A description is made from a perspective of the second device, and a procedure of the communication method in embodiments of this application includes:

Step 1301*. The second device determines a frame structure, where the frame structure includes a receiving time unit and a reflection time unit; the receiving time unit is a time unit in which the first device receives a setting instruction, and the setting instruction indicates a first state; and the reflection time unit is a time unit in which the first device reflects a signal based on the first state.

For step 1301 *, refer to step 1301. Details are not described herein again.

Step 1302*. The second device sends the information about the at least one time unit in the frame structure.

For step 1302*, refer to step 1302. Details are not described herein again.

Step 1303*. The second device sends the setting instruction.

For step 1303*, refer to step 1304. Details are not described herein again.

In the solution of this application, the first device may flexibly determine the frame structure based on an indication of the second device, and perform communication based on the frame structure, so that the first device may receive the setting instruction sent by the second device, and reflect the signal based on the first state indicated by the setting instruction. Therefore, communication flexibility of the first device is high, and the first device may be applied to a plurality of scenarios. This improves communication performance.

FIG. 14 is a schematic diagram of a communication method according to an embodiment of this application. Embodiments of this application may be used as independent embodiments, or may be combined with another embodiment of this application. This is not limited in this application. As shown in FIG. 14, the communication method may include the following steps.

Step 1401. A second device sends a time domain synchronization instruction.

For step 1401, refer to content related to that the second device sends the time domain synchronization instruction in step 101. Details are not described herein again.

Step 1402. A first device receives the time domain synchronization instruction.

For step 1402, refer to content related to that the first device receives the time domain synchronization instruction in step 101. Details are not described herein again.

Step 1403. The first device performs time domain synchronization based on the time domain synchronization instruction.

For step 1403, refer to step 102. Details are not described herein again.

Step 1404. The first device sends a time domain synchronization response. Optionally, this step may be omitted.

For step 1404, refer to content related to that the first device sends the time domain synchronization response in step 103. Details are not described herein again.

Step 1405. The second device receives the time domain synchronization response.

For step 1405, refer to content related to that the second device receives the time domain synchronization response in step 103. Details are not described herein again.

A description is made from a perspective of the first device, and a procedure of the communication method in embodiments of this application includes:

Step 1401'. The first device receives the time domain synchronization instruction.

For step 1401', refer to step 1402. Details are not described herein again.

Step 1402'. The first device performs time domain synchronization based on the time domain synchronization instruction.

For step 1402', refer to step 1403. Details are not described herein again.

Step 1403'. The first device sends the time domain synchronization response. Optionally, this step may be omitted.

For step 1403', refer to step 1404. Details are not described herein again.

A description is made from a perspective of the second device, and a procedure of the communication method in embodiments of this application includes the following steps.

Step 1401 *. The second device sends the time domain synchronization instruction.

For step 1401 *, refer to step 1401. Details are not described herein again.

Step 1402*. The second device receives the time domain synchronization response.

For step 1402*, refer to step 1404. Details are not described herein again.

In the solution of this application, the first device may perform time domain synchronization based on the time domain synchronization indication, to ensure reliability of communication with the second device and improve communication performance. Further, the first device sends the time domain synchronization response, so that the second device may determine that the first device has performed time domain synchronization. This ensures consistency of understanding of time domain synchronization between the first device and the second device, improves robustness of communication, and improves the communication performance.

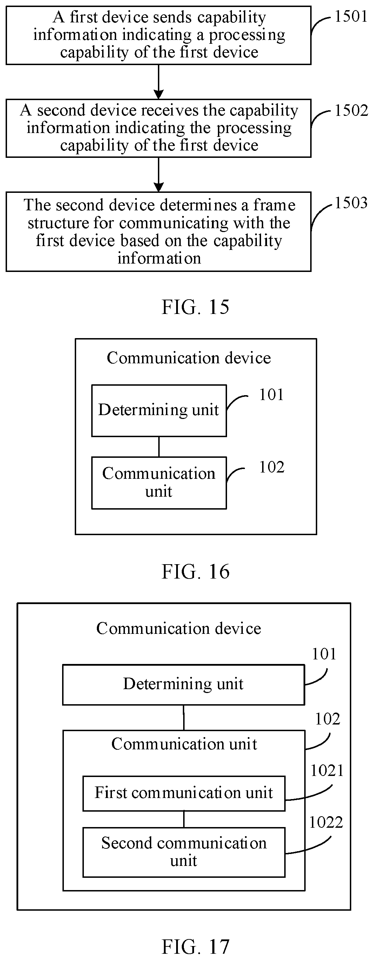

FIG. 15 is a schematic diagram of a communication method according to an embodiment of this application. Embodiments of this application may be used as independent embodiments, or may be combined with another embodiment of this application. This is not limited in this application. As shown in FIG. 15, the communication method may include the following steps.

Step 1501. A first device sends capability information indicating a processing capability of the first device.

For step 1501, refer to content related to that the first device sends the capability information in step 104. Details are not described herein again.

Step 1502. A second device receives the capability information indicating the processing capability of the first device.

For step 1502, refer to content related to that the second device receives the capability information in step 104. Details are not described herein again.

Step 1503. The second device determines a frame structure for communicating with the first device based on the capability information.

For step 1503, refer to step 105. Details are not described herein again.

A description is made from a perspective of the first device, and a procedure of the communication method in embodiments of this application includes the following steps.

Step 1501'. The first device sends the capability information indicating the processing capability of the first device.

For step 1501', refer to step 1501. Details are not described herein again.

A description is made from a perspective of the second device, and a schematic flowchart of the communication method in embodiments of this application includes:

Step 1501*. The second device receives the capability information indicating the processing capability of the first device.

For step 1501*, refer to step 1502. Details are not described herein again.

Step 1502*. The second device determines a frame structure based on the capability information.

For step 1502*, refer to step 1503. Details are not described herein again.

In the solution of this application, the first device may send the capability information about the processing capability, so that the second device may determine, based on the received capability information, the frame structure for communicating with the first device, to flexibly adjust, based on a capability of the first device, the frame structure for communicating with the first device, meet capability requirements of different first devices, improve flexibility of the frame structure of the communication, and improve communication performance.

FIG. 16 is a schematic diagram of a structure of a communication device according to an embodiment of this application. The communication device may be a first device in a communication system according to an embodiment of this application. As shown in FIG. 16, the communication device may include:

a determining unit 101, configured to determine a frame structure. The frame structure includes a receiving time unit and a reflection time unit. The receiving time unit is a time unit in which the communication device receives a setting instruction, and the setting instruction indicates a first state. The reflection time unit is a time unit in which the communication device reflects a signal based on the first state.

A communication unit 102 is configured to perform communication based on the frame structure.

Optionally, the communication device may further include: a plurality of reflection units (not shown in FIG. 16), and the reflection unit is configured to adjust a parameter of the signal. The setting instruction received by the communication device may include: adjustment information at least some of the plurality of reflection units for the parameter of the signal. The parameter of the signal may include: at least one of a phase, an amplitude, an angle of reflection, an angle of arrival, an angle of offset, a quantity of beams, and a beam angle.

Optionally, the plurality of reflection units may include: at least one active unit and at least one non-active unit. The active unit is configured to receive the signal, and the non-active unit is configured to reflect the signal.

Optionally, FIG. 17 is a schematic diagram of a structure of another communication device according to an embodiment of this application. As shown in FIG. 17, based on FIG. 16, a communication unit 102 may include: a first communication subunit 1021 and a second communication subunit 1022. The first communication subunit 1021 is configured to: receive a setting instruction through at least some active units in a receiving time unit. The second communication subunit 1022 is configured to: reflect a signal through at least some non-active units in a reflection time unit.

Optionally, the first communication subunit 1021 is configured to: receive the setting instruction through a physical downlink control channel PDCCH in the receiving time unit.

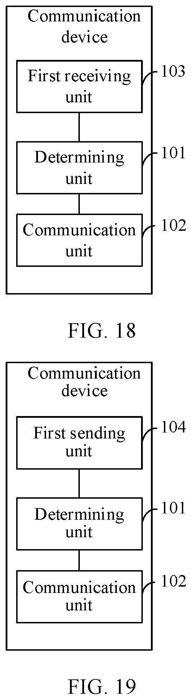

Optionally, FIG. 18 is a schematic diagram of a structure of another communication device according to an embodiment of this application. As shown in FIG. 18, based on FIG. 16, the communication device may further include: a first receiving unit 103, configured to receive information about at least one time unit in a frame structure. A determining unit 101 is configured to determine the frame structure based on the information about the at least one time unit.

Optionally, the information about the at least one time unit indicates a location of each of the at least one time unit in a target time period in which the time unit is located. The determining unit 101 is further configured to: determine the location of each of the at least one time unit in a target time period, and determine the frame structure based on the location of each of the at least one time unit in the target time period.

Optionally, the at least one time unit includes the reflection time unit, and information about the reflection time unit is carried in the setting instruction.

Optionally, FIG. 19 is a schematic diagram of a structure of another communication device according to an embodiment of this application. As shown in FIG. 19, based on FIG. 16, the communication device may further include: a first sending unit 104, configured to send capability information indicating a processing capability of the communication device.

Optionally, the frame structure further includes a processing time unit. The processing time unit is located between a receiving time unit and a reflection time unit, and the processing time unit is a time unit in which the communication device switches from a current state to a first state.

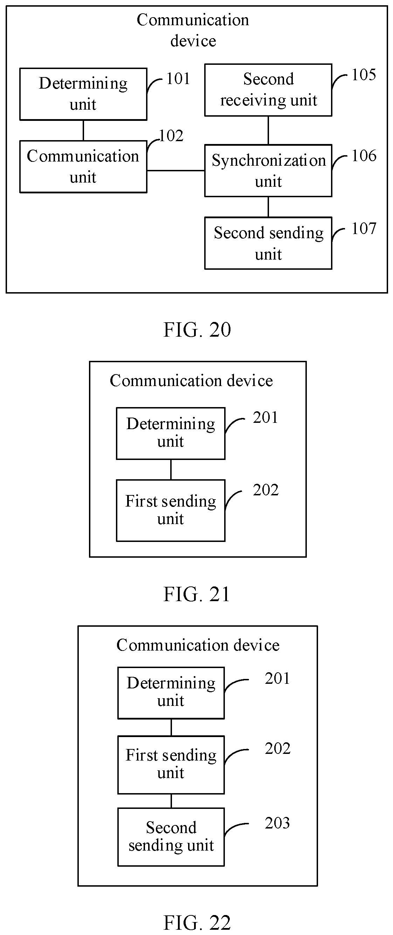

Optionally, FIG. 20 is a schematic diagram of a structure of another communication device according to an embodiment of this application. As shown in FIG. 20, based on FIG. 16, the communication device may further include: a second receiving unit 105, configured to receive a time domain synchronization instruction sent by a second device; a synchronization unit 106, configured to perform time domain synchronization based on the time domain synchronization instruction; and a second sending unit 106, configured to send a time domain synchronization response to the second device after completing the time domain synchronization. Optionally, the communication device may also not include the second sending unit 106.

Various communication devices provided in embodiments of this application may be combined with each other. For example, the two communication devices provided in FIG. 18 and FIG. 19 may be combined with each other. In this case, the communication devices include a determining unit 101, a communication unit 102, a first receiving unit 103, and a first sending unit 104. For another example, the three communication devices provided in FIG. 18, FIG. 19, and FIG. 20 may be combined with each other. In this case, the communication device includes a determining unit 101, a communication unit 102, a first receiving unit 103, a first sending unit 104, a second receiving unit 105, a synchronization unit 106, and a second sending unit 107. This is not limited in this application.

It should be understood that actions performed by at least some of the plurality of units may be completed by a same unit, and correspondingly, the at least some units may be integrated into one unit. For example, the first receiving unit 103 and the second receiving unit 105 may be integrated into one receiving unit, the first sending unit 104 and the second sending unit 107 may be integrated into one sending unit, and the determining unit 101 and the synchronization unit 106 may be integrated into one processing unit. The communication unit 102 may be integrated into the receiving unit or the processing unit. This is not limited in this application.

In summary, embodiments of this application provide a communication device. The communication device may determine the frame structure and perform communication based on the frame structure, so that the communication device may receive, in the receiving time unit, the setting instruction indicating the first state, and reflect the signal based on the first state in the reflection time unit. It may be learned that in the solution of this application, the communication device may perform communication based on the determined frame structure, so that the first device may receive a setting instruction sent by an external device, and reflect the signal based on the first state indicated by the setting instruction. Therefore, flexibility of the communication device is high. When the communication device is an IRS, flexibility of the IRS is high.

FIG. 21 is a schematic diagram of a structure of another communication device according to an embodiment of this application. The communication device may be a second device in a communication system according to an embodiment of this application. As shown in FIG. 21, the communication device may include:
a determining unit 201, configured to determine a receiving time unit in a frame structure, where the receiving time unit is a time unit in which the communication device sends a setting instruction, and the setting instruction indicates a first state.

A first sending unit 202 is configured to send the setting instruction based on the receiving time unit, to be specific, send the setting instruction in the receiving time unit in the frame structure.

Optionally, the first sending unit 202 is configured to send the setting instruction through a physical downlink control channel PDCCH.

Optionally, FIG. 22 is a schematic diagram of a structure of another communication device according to an embodiment of this application. As shown in FIG. 22, based on FIG. 21, the communication device may further include: a second sending unit 203, configured to send information about at least one time unit in the frame structure, where the frame structure may include: a receiving time unit and a reflection time unit.

Optionally, the at least one time unit includes the reflection time unit, and information about the reflection time unit is carried in the setting instruction.

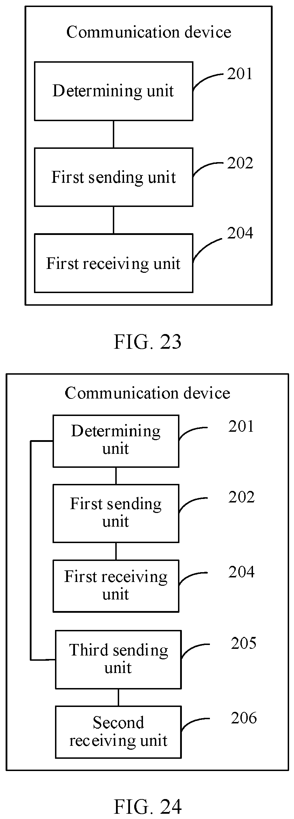

Optionally, FIG. 23 is a schematic diagram of a structure of another communication device according to an embodiment of this application. As shown in FIG. 23, based on FIG. 21, the communication device may further include: a first receiving unit 204, further configured to receive capability information indicating a processing capability. When the processing capability indicated by the capability information is lower than a processing capability threshold, a determining unit 201 is further configured to determine a processing time unit in the frame structure, where the frame structure includes: a receiving time unit, a processing time unit, and a reflection time unit.

Optionally, FIG. 24 is a schematic diagram of a structure of another communication device according to an embodiment of this application. As shown in FIG. 24, based on FIG. 21, the communication device may further include:
a third sending unit 205, configured to: send a time domain synchronization instruction before a first sending unit 202 sends a setting instruction.

A second receiving unit 206 is configured to: receive a time domain synchronization response before the first sending unit 202 sends the setting instruction.

Optionally, the communication device may also not include the second receiving unit 206.

Various communication devices provided in embodiments of this application may be combined with each other. For example, the two communication devices provided in FIG. 22 and FIG. 23 may be combined with each other. In this case, the communication devices include a determining unit 201, a first sending unit 202, a second sending unit 203, and a first receiving unit 204. For another example, the three communication devices provided in FIG. 22, FIG. 23, and FIG. 24 may be combined with each other. In this case, the communication device includes a determining unit 201, a first sending unit 202, a second sending unit 203, a first receiving unit 204, a third sending unit 205, and a second receiving unit 206. This is not limited in this application.

It should be understood that actions performed by at least some of the plurality of units may be completed by a same unit, and correspondingly, the at least some units may be integrated into one unit. For example, the first receiving unit 204 and the second receiving unit 206 may be integrated into one receiving unit, and the first sending unit 202, the second sending unit 203, and the third sending unit 205 may be integrated into one sending unit. This is not limited in this application.

In summary, embodiments of this application provide another communication device. The communication device may determine the receiving time unit in the frame structure, and send, to an external device based on the receiving time unit, a setting instruction that indicates a first state, so that the external device may switch to the first state based on the setting instruction, and reflect a signal based on the first state. It may be learned that in the solution of this application, the communication device may control the external device to reflect the signal in the first state, so that flexibility of the external device is high. When the controlled external device is an IRS, flexibility of the IRS is high.

It may be clearly understood by a person skilled in the art that, for the purpose of convenient and brief description, for a detailed operating process of the foregoing communication device and various modules, refer to a corresponding process in the foregoing method embodiments. Details are not described herein again.

It should be understood that the communication device provided in embodiments of this application may alternatively be implemented by using an application-specific integrated circuit (application-specific integrated circuit, ASIC) or a programmable logic device (programmable logic device, PLD). The PLD may be a complex programmable logical device (complex programmable logical device, CPLD), a field-programmable gate array (field-programmable gate array, FPGA), a generic array logic (generic array logic, GAL), or any combination thereof. Alternatively, the communication method provided in the foregoing method embodiments may be implemented through software. When the communication method provided in the foregoing method embodiments is implemented through software, various modules in the communication device may be software modules.

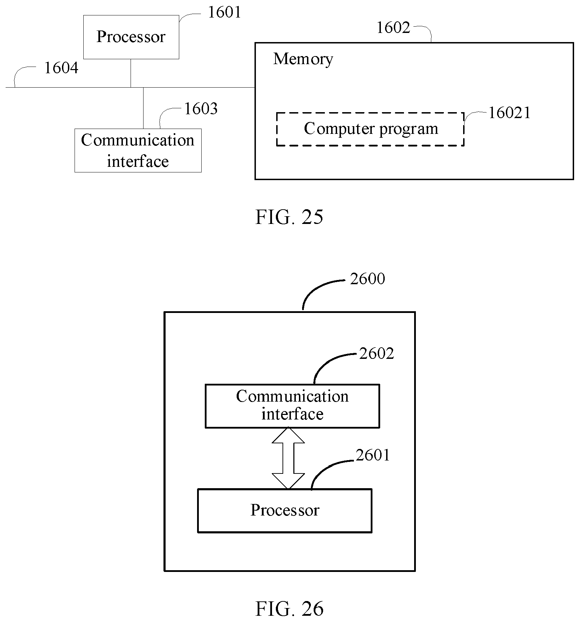

FIG. 25 is a schematic diagram of a structure of still another communication device according to an embodiment of this application. The communication device may be applied to a communication system. For example, the communication device may be a first device in the communication system, or may be a second device in the communication system. The communication device may be applied to the communication system shown in FIG. 1, FIG. 7, or FIG. 8. For example, the communication device may be the first device 03 shown in FIG. 1, or the base station 01 shown in FIG. 1.

Referring to FIG. 25, the communication device may include: a processor 1601, a memory 1602, a communication interface 1603, and a bus 1604. The bus 1604 is configured to connect the processor 1601, the memory 1602, and the communication interface 1603. A communication connection to another device may be implemented through the communication interface 1603 (which may be wired or wireless). The memory 1602 stores a computer program 16021, and the computer program 16021 is configured to implement various application functions. When the various modules in the communication device shown in any one of FIG. 16 to FIG. 24 are implemented by using software modules, programs corresponding to these software modules may be stored in the memory 1602 of the communication device.

It should be understood that, in embodiments of this application, the processor 1001 may be a CPU, or the processor 1001 may be another general-purpose processor, a digital signal processor (DSP), an application-specific integrated circuit (ASIC), a field-programmable gate array (FPGA), a GPU or another programmable logic device, a discrete gate or a transistor logic device, a discrete hardware component, or the like. The general-purpose processor may be a microprocessor or any conventional processor or the like.

The processor 1001 may further include a hardware chip, and the hardware chip may be an application-specific integrated circuit (ASIC), a programmable logic device (PLD), or a combination thereof. The PLD may be a complex programmable logic device (CPLD), a field-programmable gate array (FPGA), a generic array logic (GAL), or any combination thereof.

The memory 1602 may be a volatile memory or a non-volatile memory, or may include both a volatile memory and a non-volatile memory. The non-volatile memory may be a read-only memory (read-only memory, ROM), a programmable ROM (programmable ROM, PROM), an erasable PROM, EPROM (erasable PROM, EPROM), an electrically EPROM (electrically EPROM, EEPROM), a compact disc read-only memory (compact disc read-only memory, CD-ROM), a flash memory (flash memory), a hard disk drive (hard disk drive, HDD), a solid-state drive (solid-state drive, SSD), or a flash memory. The volatile memory may be a random access memory (random access memory, RAM), used as an external cache. Through an example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory 1602 may further include any combination of the foregoing types of memories.

In addition to a data bus, the bus 1604 may further include a power bus, a control bus, a state signal bus, and the like. However, for clear description, various types of buses in the figure are marked as the bus 1604.

It should be noted that when the communication device is a first device in a communication system, the communication device further includes a plurality of reflection units (not shown in FIG. 25), and the communication device is configured to reflect a signal by using at least some reflection units.

Optionally, the first device includes: a controller and the plurality of reflection units. The controller may include the structure shown in FIG. 25, or the structure shown in FIG. 25.

Referring to FIG. 26, embodiments of this application provide a communication device 2600. The device includes a communication interface 2602 configured to receive and send data and a processor 2601 coupled to the communication interface. The processor 2601 performs the method provided in the foregoing embodiments. The processor 2601 further performs, through the communication interface 2602, data receiving and sending in the foregoing embodiments.

Embodiments of this application provide a communication system. The communication system includes: any first device provided in embodiments of this application and any second device provided in embodiments of this application.

Embodiments of this application further provide a computer-readable storage medium. The computer-readable storage medium stores instructions. When the computer-readable storage medium is run on a computer, the computer is enabled to perform the communication method provided in the foregoing method embodiments.

Embodiments of this application further provide a computer program product including instructions. When the computer program product is run on a computer, the computer is enabled to perform the communication method provided in the foregoing method embodiments.

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions. When the computer program instructions are loaded or executed on a computer, all or some of the processes or the functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive SSD.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

The foregoing description is merely some specific implementations of this application, but is not intended to limit the protection scope of this application. Any person skilled in the art may make changes and modifications to these embodiments within the technical scope disclosed in this application. Therefore, the following claims are intended to be construed as to cover the foregoing embodiments and to indicate changes and modifications falling within the scope of this application. Therefore, the protection scope of this application shall be subject to the protection scope of the claims.

In this application, terms such as "first" and "second" are used to distinguish same items or similar items that have basically same effects and functions. It should be understood that there is no logical or time sequence dependency between "first", "second", and "n$^{th}$". A quantity and an execution sequence are not limited. It should also be understood that although terms such as "first" and "second" are used in the following descriptions to describe various elements, these elements should not be limited by the terms. These terms are merely used to distinguish one element from another element. For example, without departing from the scope of the various examples, a first device may be referred to as a second device, and similarly, a second device may be referred to as a first device.

The term "at least one" in this application means one or more, and the term "a plurality of" in this application means two or more. For example, a plurality of communication devices are two or more communication devices. The term "and/or" in this application means either of "and" and "or". Terms "system" and "network" may be used interchangeably in this specification.

The foregoing descriptions are merely optional implementations of this application, but the protection scope of this application is not limited thereto. Any equivalent modification or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   determining, by a first device, a frame structure, wherein the frame structure comprises a receiving time unit and a reflection time unit; the receiving time unit is a time unit in which the first device receives a setting instruction, and the setting instruction indicates a first state; and the reflection time unit is a time unit in which the first device reflects a signal based on the first state; and
   performing, by the first device, communication based on the frame structure.

2. The method according to claim 1, wherein the first device comprises a plurality of reflection units, and the reflection unit is configured to adjust a parameter of the signal; and
   the setting instruction comprises: adjustment information of at least one of the plurality of reflection unit for the parameter of the signal.

3. The method according to claim 2, wherein the parameter of the signal comprises: at least one of a phase, an amplitude, an angle of reflection, an angle of arrival, an angle of offset, a quantity of beams, and a beam angle.

4. The method according to claim 2 or 3, wherein the plurality of reflection units comprise: at least one active unit and at least one non-active unit, wherein the active unit is configured to receive the signal, and the non-active unit is configured to reflect the signal; and

the performing, by the first device, communication based on the frame structure comprises:

> receiving, by the first device, the setting instruction through the at least one active unit in the receiving time unit; and
> reflecting, by the first device, the signal through the at least one non-active unit in the reflection time unit.

5. The method according to any one of claims 1 to 4, wherein the performing, by the first device, communication based on the frame structure comprises:
receiving, by the first device, the setting instruction through a physical downlink control channel PDCCH in the receiving time unit.

6. The method according to any one of claims 1 to 5, wherein the method comprises:

> receiving, by the first device, information about at least one time unit in the frame structure; and
> the determining, by a first device, a frame structure comprises:
> determining, by the first device, the frame structure based on the information about the at least one time unit.

7. The method according to claim 6, wherein the information about the at least one time unit indicates a location of each of the at least one time unit in a target time period in which the time unit is located; and

the determining, by the first device, the frame structure based on the information about the at least one time unit comprises:

> determining, by the first device, the location of each of the at least one time unit in the target time period; and
> determining, by the first device, the frame structure based on the location of each of the at least one time unit in the target time period.

8. The method according to claim 6 or 7, wherein the at least one time unit comprises the reflection time unit, and information about the reflection time unit is carried in the setting instruction.

9. The method according to any one of claims 1 to 8, wherein the method further comprises:
sending, by the first device, capability information indicating a processing capability of the first device.

10. The method according to any one of claims 1 to 9, wherein the frame structure further comprises a processing time unit; and
the processing time unit is located between the receiving time unit and the reflection time unit, and the processing time unit is a time unit in which the first device switches from a current state to the first state.

11. The method according to any one of claims 1 to 10, wherein the method further comprises:

> receiving, by the first device, a time domain synchronization instruction;
> performing, by the first device, time domain synchronization based on the time domain synchronization instruction; and
> sending, by the first device, a time domain synchronization response.

12. A communication method, comprising:

> determining, by a second device, a receiving time unit in a frame structure, wherein the receiving time unit is a time unit in which the second device sends a setting instruction, and the setting instruction indicates a first state; and
> sending, by the second device, the setting instruction based on the receiving time unit.

13. The method according to claim 12, wherein the sending, by the second device, the setting instruction based on the receiving time unit comprises:
sending, by the second device, the setting instruction through a physical downlink control channel PDCCH based on the receiving time unit.

14. The method according to claim 12 or 13, wherein the method comprises:
sending, by the second device, information about at least one time unit in the frame structure, wherein the frame structure comprises: the receiving time unit and a reflection time unit.

15. The method according to claim 14, wherein the at least one time unit comprises the reflection time unit, and information about the reflection time unit is carried in the setting instruction.

16. The method according to any one of claims 12 to 15, wherein the method further comprises:

> receiving, by the second device, capability information indicating a processing capability; and
> when the processing capability indicated by the capability information is less than a processing capability threshold, the frame structure comprises: the receiving time unit, a processing time unit, and the reflection time unit.

**17.** The method according to any one of claims 12 to 16, wherein before the sending, by the second device, the setting instruction based on the receiving time unit, the method further comprises:

sending, by the second device, a time domain synchronization instruction; and
receiving, by the second device, a time domain synchronization response.

**18.** A communication device, wherein the communication device comprises:

a determining unit, configured to determine a frame structure, wherein the frame structure comprises a receiving time unit and a reflection time unit; the receiving time unit is a time unit in which the communication device receives a setting instruction, and the setting instruction indicates a first state; and the reflection time unit is a time unit in which the communication device reflects a signal based on the first state; and
a communication unit, configured to perform communication based on the frame structure.

**19.** The communication device according to claim 18, wherein the communication device comprises a plurality of reflection units, and the reflection unit is configured to adjust a parameter of the signal; and
the setting instruction comprises: adjustment information of at least one of the plurality of reflection unit for the parameter of the signal.

**20.** The communication device according to claim 19, wherein the parameter of the signal comprises: at least one of a phase, an amplitude, an angle of reflection, an angle of arrival, an angle of offset, a quantity of beams, and a beam angle.

**21.** The communication device according to claim 19 or 20, wherein the plurality of reflection units comprise: at least one active unit and at least one non-active unit, wherein the active unit is configured to receive the signal, and the non-active unit is configured to reflect the signal; and
the communication unit is configured to:

receive the setting instruction through the at least one active unit in the receiving time unit; and
reflect the signal through the at least one non-active unit in the reflection time unit.

**22.** The communication device according to any one of claims 18 to 21, wherein the communication unit is configured to:

receive the setting instruction through a physical downlink control channel PDCCH in the receiving time unit.

**23.** The communication device according to any one of claims 18 to 22, wherein the communication device comprises: a first receiving unit, configured to receive information about at least one time unit in the frame structure; and
the determining unit is configured to: determine the frame structure based on the information about the at least one time unit.

**24.** The communication device according to claim 23, wherein the information about the at least one time unit indicates a location of each of the at least one time unit in a target time period in which the time unit is located; and
the determining unit is configured to:

determine the location of each of the at least one time unit in the target time period; and
determine the frame structure based on the location of each of the at least one time unit in the target time period.

**25.** The communication device according to claim 23 or 24, wherein the at least one time unit comprises the reflection time unit, and information about the reflection time unit is carried in the setting instruction.

**26.** The communication device according to any one of claims 18 to 25, wherein the communication device further comprises:
a first sending unit, configured to send capability information indicating a processing capability of the communication device.

**27.** The communication device according to any one of claims 18 to 26, wherein the frame structure further comprises a processing time unit, wherein
the processing time unit is located between the receiving time unit and the reflection time unit, and the processing time unit is a time unit in which the communication device switches from a current state to the first state.

**28.** The communication device according to any one of claims 18 to 27, wherein the communication device further comprises: a second receiving unit, configured to receive a time domain synchronization instruction;

a synchronization unit, configured to perform time domain synchronization based on the time domain synchronization instruction; and
a second sending unit, configured to send a time domain synchronization response.

**29.** A communication device, wherein the communication device comprises:

> a determining unit, configured to determine a receiving time unit in a frame structure, wherein the receiving time unit is a time unit in which the communication device sends a setting instruction, and the setting instruction indicates a first state; and
> a first sending unit, configured to send the setting instruction based on the receiving time unit.

**30.** The communication device according to claim 29, wherein the first sending unit is configured to:
send the setting instruction through a physical downlink control channel PDCCH based on the receiving time unit.

**31.** The communication device according to claim 29 or 30, wherein the communication device comprises:
a second sending unit, configured to send information about at least one time unit in the frame structure, wherein the frame structure comprises: the receiving time unit and a reflection time unit.

**32.** The communication device according to claim 31, wherein the at least one time unit comprises the reflection time unit, and information about the reflection time unit is carried in the setting instruction.

**33.** The communication device according to any one of claims 29 to 32, wherein the communication device further comprises:

> a first receiving unit, configured to receive capability information indicating a processing capability; and
> when the processing capability indicated by the capability information is less than a processing capability threshold, the frame structure comprises: the receiving time unit, a processing time unit, and the reflection time unit.

**34.** The communication device according to any one of claims 29 to 33, wherein the communication device further comprises:

> a third sending unit, configured to send a time domain synchronization instruction before the first sending unit sends the setting instruction based on the receiving time unit; and
> a second receiving unit, configured to receive a time domain synchronization response before the first sending unit sends the setting instruction based on the receiving time unit.

**35.** A communication apparatus, wherein the communication apparatus comprises: a processor, and the processor is configured to execute a program stored in a memory, to implement the communication method according to any one of claims 1 to 11.

**36.** The communication apparatus according to claim 35, further comprising the memory and/or a communication interface, wherein the communication interface is configured to receive and send a signal.

**37.** A communication apparatus, wherein the communication apparatus comprises: a processor, and the processor is configured to execute a program stored in a memory, to implement the communication method according to any one of claims 12 to 17.

**38.** The communication apparatus according to claim 37, further comprising the memory and/or a communication interface, wherein the communication interface is configured to receive and send a signal.

**39.** A communication system, wherein the communication system comprises: a first device and a second device, wherein

> the first device is: the communication device according to claim 18, or the communication apparatus according to claim 35 or 36; and
> the second device is: the communication device according to claim 19, or the communication apparatus according to claim 37 or 38.

**40.** A computer-readable storage medium, wherein the computer-readable storage medium stores instructions, and when the instructions are run on a computer, the method according to any one of claims 1 to 11, or the method according to any one of claims 12 to 17 is performed.

**41.** A computer program product comprising instructions, wherein when the instructions are run on a computer, the method according to any one of claims 1 to 11, or the method according to any one of claims 12 to 17 is performed.

**42.** A computer program, wherein when the computer program is run on a computer, the method according to any one of claims 1 to 11 is performed, or the method according to any one of claims 12 to 17 is performed.

FIG. 1

03

FIG. 2

```
┌─────────────────┐                                    ┌─────────────────┐
│  Second device  │                                    │   First device  │
└─────────────────┘                                    └─────────────────┘
        │               ┌──────────────────────────┐           │
        │──────────────▶│ 101. Send a time domain  │──────────▶│
        │               │ synchronization instruction│         │
        │               └──────────────────────────┘           │
        │                            ┌──────────────────────────┐
        │                            │ 102. Perform time domain │
        │                            │ synchronization based on the│
        │                            │ time domain synchronization │
        │                            │ instruction              │
        │                            └──────────────────────────┘
        │               ┌──────────────────────────┐           │
        │◀──────────────│ 103. Send a time domain  │◀──────────│
        │               │ synchronization response │           │
        │               └──────────────────────────┘           │
        │        ┌─────────────────────────────────┐           │
        │◀───────│ 104. Send capability information │◀──────────│
        │        │ indicating a processing capability│         │
        │        │ of the first device             │           │
        │        └─────────────────────────────────┘           │
┌─────────────────────┐                                        │
│ 105. Determine a frame│                                      │
│ structure based on the│                                      │
│ capability information│                                       │
└─────────────────────┘                                        │
        │        ┌─────────────────────────────┐               │
        │────────│ 106. Send information about at│─────────────▶│
        │        │ least one time unit in the frame│            │
        │        │ structure                   │               │
        │        └─────────────────────────────┘               │
        │                            ┌──────────────────────────┐
        │                            │ 107. Determine the frame │
        │                            │ structure based on the   │
        │                            │ information about the at least one│
        │                            │ time unit in the frame structure │
        │                            └──────────────────────────┘
┌─────────────────────┐                                        │
│ 108. Obtain a setting│                                       │
│ instruction         │                                        │
└─────────────────────┘                                        │
        │        ┌──────────────────────────────┐              │
        │────────│ 109. Send the setting instruction│─────────▶│
        │        │ based on the frame structure │              │
        │        └──────────────────────────────┘              │
        │                            ┌──────────────────────────┐
        │                            │ 110. Switch a state from a│
        │                            │ current state to a first state based│
        │                            │ on the frame structure and the│
        │                            │ setting instruction      │
        │                            └──────────────────────────┘
        │                            ┌──────────────────────────┐
        │                            │ 111. Reflect a signal based on the│
        │                            │ frame structure and the first state│
        │                            └──────────────────────────┘
        │                                                       │
```

FIG. 3

Time unit

Receiving time unit

Service time unit

Slot

FIG. 4

Time unit

Receiving time unit

Service time unit

Slot i

Slot i+1

FIG. 5

Time unit

Receiving
time unit

Service
time unit

Processing time unit

Slot

FIG. 6

03

S1

S2

S3

01

02a

02b

02c

FIG. 7

FIG. 8

FIG. 9

| Adjustment information field | Time unit field |
|---|---|

FIG. 10

| Time unit field | Adjustment information field |
|---|---|

FIG. 11

A second device determines a receiving time unit in a frame structure ⌐1201

↓

The second device sends a setting instruction in the receiving time unit ⌐1202

↓

A first device determines the frame structure ⌐1203

↓

The first device performs communication based on the frame structure ⌐1204

FIG. 12

A second device determines a frame structure ⌐1301

↓

The second device sends information about at least one time unit in the frame structure ⌐1302

↓

A first device receives the information about the at least one time unit in the frame structure ⌐1303

↓

The second device sends a setting instruction in a receiving time unit ⌐1304

↓

The first device performs communication based on the information about the at least one time unit in the frame structure ⌐1305

FIG. 13

A second device sends a time domain synchronization instruction ⌐1401

↓

A first device receives the time domain synchronization instruction ⌐1402

↓

The first device performs time domain synchronization based on the time domain synchronization instruction ⌐1403

↓

The first device sends a time domain synchronization response ⌐1404

↓

The second device receives the time domain synchronization response ⌐1405

FIG. 14

A first device sends capability information indicating a processing capability of the first device — 1501

A second device receives the capability information indicating the processing capability of the first device — 1502

The second device determines a frame structure for communicating with the first device based on the capability information — 1503

FIG. 15

Communication device

Determining unit — 101

Communication unit — 102

FIG. 16

Communication device

Determining unit — 101

Communication unit — 102

First communication unit — 1021

Second communication unit — 1022

FIG. 17

Communication
device

| First receiving unit | ┌ 103 |

| Determining unit | ┌ 101 |

| Communication unit | ┌ 102 |

FIG. 18

Communication
device

| First sending unit | ┌ 104 |

| Determining unit | ┌ 101 |

| Communication unit | ┌ 102 |

FIG. 19

Communication
device

Determining
unit — 101

Second
receiving unit — 105

Communication
unit — 102

Synchronization
unit — 106

Second sending
unit — 107

FIG. 20

Communication device

Determining
unit — 201

First sending
unit — 202

FIG. 21

Communication device

Determining
unit — 201

First sending
unit — 202

Second
sending unit — 203

FIG. 22

Communication device

| Determining unit | 201 |

| First sending unit | 202 |

| First receiving unit | 204 |

FIG. 23

Communication device

| Determining unit | 201 |

| First sending unit | 202 |

| First receiving unit | 204 |

| Third sending unit | 205 |

| Second receiving unit | 206 |

FIG. 24

Processor — 1601

1604

1603

Communication interface

1602

Memory

Computer program — 16021

FIG. 25

2600

2602

Communication interface

2601

Processor

FIG. 26

## INTERNATIONAL SEARCH REPORT

| | International application No. |
|---|---|
| | **PCT/CN2021/133697** |

### A. CLASSIFICATION OF SUBJECT MATTER

H04B 7/0413(2017.01)i

According to International Patent Classification (IPC) or to both national classification and IPC

### B. FIELDS SEARCHED

Minimum documentation searched (classification system followed by classification symbols)

H04B;H04W

Documentation searched other than minimum documentation to the extent that such documents are included in the fields searched

Electronic data base consulted during the international search (name of data base and, where practicable, search terms used)

CNTXT; CNKI; ENTXT; WPABS; IEEE; 3GPP: 智能, 智慧, 可重构, 反射面, 表面, 帧, 符号, 时隙, 时间, 信号, 格式, 结构, 接收, 反射, 主动, 被动, 导频, 训练, 反馈, 延迟, 处理, intelligent reflecting surface, large intelligent surface, reconfigurable surface, frame, symbol, structure, format, time, slot, reflection, reception, active, passive, pilot, training, feedback, delay, LIS, RIS, IRS

### C. DOCUMENTS CONSIDERED TO BE RELEVANT

| Category* | Citation of document, with indication, where appropriate, of the relevant passages | Relevant to claim No. |
|---|---|---|
| X | CN 111866726 A (ZTE CORPORATION) 30 October 2020 (2020-10-30) description paragraphs 43-204 | 1-8, 11-15, 17-25, 28-32, 34-42 |
| A | CN 111654314 A (UNIVERSITY OF ELECTRONIC SCIENCE AND TECHNOLOGY OF CHINA) 11 September 2020 (2020-09-11) entire document | 1-42 |
| A | CN 109495569 A (UNIVERSITY OF ELECTRONIC SCIENCE AND TECHNOLOGY OF CHINA) 19 March 2019 (2019-03-19) entire document | 1-42 |
| A | CN 111245492 A (BEIJING UNIVERSITY OF POSTS AND TELECOMMUNICATIONS) 05 June 2020 (2020-06-05) entire document | 1-42 |
| A | CN 111245494 A (SOUTHEAST UNIVERSITY) 05 June 2020 (2020-06-05) entire document | 1-42 |
| A | CN 111818533 A (ZHEJIANG UNIVERSITY) 23 October 2020 (2020-10-23) entire document | 1-42 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 February 2022** | **16 February 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**EP 4 236 094 A1**

**INTERNATIONAL SEARCH REPORT**

<table>
<tr><td colspan="2">International application No.</td></tr>
<tr><td colspan="2">**PCT/CN2021/133697**</td></tr>
</table>

**C. DOCUMENTS CONSIDERED TO BE RELEVANT**

| Category* | Citation of document, with indication, where appropriate, of the relevant passages | Relevant to claim No. |
|---|---|---|
| A | US 2020300996 A1 (APPLE INC.) 24 September 2020 (2020-09-24)<br>entire document | 1-42 |
| A | WO 2020122220 A1 (PANASONIC IP CORP. AMERICA) 18 June 2020 (2020-06-18)<br>entire document | 1-42 |
| A | CN 111131096 A (SOUTHEAST UNIVERSITY) 08 May 2020 (2020-05-08)<br>entire document | 1-42 |
| A | CN 110830097 A (SOUTHWEST JIAOTONG UNIVERSITY) 21 February 2020<br>(2020-02-21)<br>entire document<br>pp. 36-43 | 1-42 |
| A | 伍明江 等 (WU, Mingjiang et al.). "面向6G 物联网的主被动互惠传输关键技术 (Key<br>Technologies of Symbiotic Transmission for 6G Internet of Things)"<br>《物联网学报》 (Chinese Journal on Internet of Thing),<br>Vol. 4, No. 1, 23 March 2020 (2020-03-23),<br>pp. 45-51 | 1-42 |
| A | Rawan Alghamdi et al. "Intelligent Surfaces for 6G Wireless Networks: A Survey of<br>Optimization and Performance"<br>《IEEE Access》 , Vol. 8, 19 October 2020 (2020-10-19),<br>pp. 202795-202818 | 1-42 |

Form PCT/ISA/210 (second sheet) (January 2015)

## INTERNATIONAL SEARCH REPORT
### Information on patent family members

International application No.

**PCT/CN2021/133697**

| Patent document cited in search report | | | Publication date (day/month/year) | Patent family member(s) | | | Publication date (day/month/year) |
|---|---|---|---|---|---|---|---|
| CN | 111866726 | A | 30 October 2020 | None | | | |
| CN | 111654314 | A | 11 September 2020 | None | | | |
| CN | 109495569 | A | 19 March 2019 | None | | | |
| CN | 111245492 | A | 05 June 2020 | None | | | |
| CN | 111245494 | A | 05 June 2020 | None | | | |
| CN | 111818533 | A | 23 October 2020 | None | | | |
| US | 2020300996 | A1 | 24 September 2020 | US | 11194032 | B2 | 07 December 2021 |
| WO | 2020122220 | A1 | 18 June 2020 | US | 2021149016 | A1 | 20 May 2021 |
| | | | | CN | 112334787 | A | 05 February 2021 |
| | | | | JP | WO2020122220 | A1 | 21 October 2021 |
| | | | | EP | 3896481 | A1 | 20 October 2021 |
| CN | 111131096 | A | 08 May 2020 | None | | | |
| CN | 110830097 | A | 21 February 2020 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011388483